(19) Europäisches Patentamt / European Patent Office / Office européen des brevets

(11) **EP 2 893 685 B1**

(12) **EUROPEAN PATENT SPECIFICATION**

(45) Date of publication and mention
of the grant of the patent:
**26.07.2017 Bulletin 2017/30**

(21) Application number: **13766777.0**

(22) Date of filing: **06.09.2013**

(51) Int Cl.:
*H04L 29/06* (2006.01)          *G06F 9/50* (2006.01)
*G06Q 10/06* (2012.01)

(86) International application number:
**PCT/US2013/058642**

(87) International publication number:
**WO 2014/039921 (13.03.2014 Gazette 2014/11)**

(54) **INFRASTRUCTURE FOR PROVIDING CLOUD SERVICES**

MULTIDOMAIN IDENTITÄTSVERWALTUNGSSYSTEM

SYSTÈME MULTIDOMAINE DE GESTION D'IDENTITÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2012 US 201261698459 P
07.09.2012 US 201261698413 P
14.03.2013 US 201361785299 P
15.03.2013 US 201361794427 P
15.03.2013 US 201313841243
15.03.2013 US 201313842269
15.03.2013 US 201313840943**

(43) Date of publication of application:
**15.07.2015 Bulletin 2015/29**

(73) Proprietor: **Oracle International Corporation
Redwood Shores, California 94065 (US)**

(72) Inventors:
• **CHATTERJEE, Ramkrishna
Nashua, New Hampshire 03062 (US)**
• **ARUN, Gopalan
Saratoga, California 95070 (US)**
• **SINGH, Ajay, Kumar
Delhi 110085 (IN)**
• **VASUDEVAN, Ramesh
Los Altos, California 94024 (US)**
• **EVANS, Neil
Madison, Connecticut 06443 (US)**

(74) Representative: **Gill Jennings & Every LLP
The Broadgate Tower
20 Primrose Street
London EC2A 2ES (GB)**

(56) References cited:
US-A- 6 052 684          US-A1- 2007 005 536
US-A1- 2007 028 098      US-A1- 2012 047 357
US-A1- 2012 131 194

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCES TO RELATED APPLICATIONS

BACKGROUND

The present disclosure relates to computer systems and software, and more particularly to techniques for facilitating and automating the provision of services in a cloud environment.

Cloud computing is a model for enabling convenient, on-demand network access to a shared pool of configurable computing resources (e.g., networks, servers, storage, applications, and services). The services provided or accessed through the cloud (or network) are referred to as cloud services. There is a lot of processing that needs to be performed by a cloud service provider to make cloud services available to a subscribing customer. Due to its complexity, much of this processing is still done manually. For example, provisioning resources for providing such cloud services can be a very labor intensive process.

US 2012/0047357 A1 to International Business Machines Corporation discloses a method for enabling control in a cloud computing environment that includes initializing a portion of computing resources identified for enabling service to a user system in a cloud computing environment. The method also includes initializing another portion of the computing resources. After the service in the cloud computing environment has been enabled, cloud computing services may be provided by the host system to one or more user systems.

SUMMARY

Certain embodiments of the present invention provide techniques for automating the provisioning, managing and tracking of services provided by a cloud infrastructure system. In one embodiment, the cloud infrastructure system stores subscription order information related to one or more services subscribed to by a customer in the cloud infrastructure system.

In one embodiment, when a subscription order from a customer is received, cloud infrastructure system performs several processing steps before the services requested by the order are usable by the customer. These processing steps may involve verifying the order that may in turn require getting additional information from the customer, provisioning resources for providing one or more requested services, creating identity domains to ensure security for the customer data, and the like. Many of these processing steps may take some time to be performed. However, the customer typically wants to start using the ordered services as soon as possible. In certain embodiments, techniques for automating the provisioning, managing and tracking of services provided by cloud infrastructure system include providing the customer with the ability to gain access to services requested in the subscription order upon placing the subscription order and without the customer having to wait until all the steps involved in processing the subscription order are complete.

Some embodiments relate to techniques for determining a workflow for processing a customer's subscription order. The method includes storing subscription order information related to a subscription order ordering services from a set of services provided by the cloud infrastructure system. The method then includes identifying, based upon the subscription order information, a primary order workflow for processing the subscription order. The primary order workflow comprises one or more steps to be performed prior to enabling use of the ordered services. The method then includes identifying, based upon the subscription order information, a secondary order workflow for processing the subscription order. The secondary order workflow comprises one or more steps to be performed for processing the subscription order. Then, the method includes enabling access to the ordered services after completion of execution of the primary order workflow. In one embodiment, access is enabled before completion of execution of the steps in the secondary order workflow.

In some embodiments, upon receiving a subscription request from a customer for one or more services, cloud infrastructure system provisions resources to provide the requested services. Once resources for a requested service have been provisioned, in many instances a customer may overuse the resources in the service. In certain embodiments, as part of automating the provisioning, managing and tracking of services, cloud infrastructure system computes and tracks such overuse or overage of resources provisioned to services in the customer's subscription order.

Some embodiments relate to techniques for computing overage of resources provisioned to services in the customer's subscription order. The processing may include storing subscription order information related to services subscribed to by a customer. The processing may then include determining resource usage information for the resources associated with the services and computing an overage for the resources for an overage period based on the resource usage information and the subscription order information. The overage of the resources may then be provided to a customer utilizing the services in the cloud infrastructure system.

In certain embodiments, the cloud infrastructure system provides a framework for handling the secure interaction between components in the cloud infrastructure system that wish to transfer information between each other during processing of a customer's subscription order. In one embodiment, the components are assigned to various security zones. The assignment of a component to a security zone may be based upon the sensitivity of the data handled by the components, the sensitivity of functions performed by the component, and the like.

In one embodiment, the framework orders the security zones of components based on security levels. The framework protects the transfer of information between components in security zones with different security levels. A component in a higher security zone pushes information to a component in a lower security zone component and pulls information from a component in lower security zone. A component in a lower security zone may not have direct read or write access to the data managed by a component in a higher security zone. Components within the same security zone may have read or write access with respect to each other. In one embodiment, the granularity provided by the security zones is a tradeoff between security and efficiency when transferring information between two components where the communication between two components belonging to security zones with the same security level is faster and more efficient than the communication between two components belonging to security zones with different security levels.

Some embodiments relate to techniques for providing secure interaction between components in a cloud infrastructure system that wish to transfer information between each other during processing of a customer's subscription order. The processing includes storing subscription order information related to services subscribed to by a customer. The processing then includes receiving a request to transfer the information between a first component and a second component in the cloud infrastructure and determining a first security zone for the first component and a second security zone for the second component. The method then includes determining a first security level associated with the first security zone and a second security level associated with the second security zone. The processing further includes determining the transfer of information between the first component and the second component based upon the first security level, the second security level, and security rules information. In one embodiment, the security rules information specifies rules related to the transfer of information between the first component and the second component.

BRIEF DESCRIPTION OF THE DRAWINGS

Illustrative embodiments of the present invention are described in detail below with reference to the following drawing figures:

Fig. 1A is a logical view of a cloud infrastructure system according to one embodiment of the present invention.

Fig. 1B is a simplified block diagram of a hardware/software stack that may be used to implement a cloud infrastructure system according to an embodiment of the present invention.

Fig. 2 is a simplified block diagram of a system environment for implementing the cloud infrastructure system shown in Fig. 1A.

Fig. 3A depicts a simplified flowchart 300 depicting processing that may be performed by the TAS module in the cloud infrastructure system, in accordance with an embodiment of the present invention.

Fig. 3B depicts a simplified high level diagram of one or more sub-modules in the TAS module in the cloud infrastructure system, in accordance with an embodiment of the present invention.

Fig. 4 depicts an exemplary distributed deployment of the TAS component, according to an embodiment of the present invention.

Fig. 5 is a simplified block diagram illustrating the interactions of the SDI module with one or more modules in the cloud infrastructure system, in accordance with an embodiment of the present invention.

Fig. 6 depicts a simplified high level diagram of sub-modules of the SDI module according to an embodiment of the present invention.

Fig. 7A depicts a simplified flowchart depicting processing that may be performed by the SDI module in the cloud infrastructure system, in accordance with an embodiment of the present invention.

Fig. 7B depicts a simplified block diagram showing the high-level architecture of a Nuviaq system 710 and its relationships with other cloud infrastructure components according to an embodiment of the present invention.

Fig. 7C depicts an example sequence diagram illustrating steps of a provisioning process using a Nuviaq system according to an embodiment of the present invention.

Fig. 7D depicts an example sequence diagram illustrating steps of a deployment process using a Nuviaq system according to an embodiment of the present invention.

Fig. 7E depicts an example of database instances provisioned for a database service according to an embodiment of the present invention.

Fig. 8 is a high level block diagram illustrating an overage framework, in accordance with one embodiment of the present invention.

Fig. 9A depicts a simplified flowchart depicting processing that may be performed by the overage framework for computing the overage of one or more resources assigned to one or more services in a customer's subscription order in cloud infrastructure system 100.

Fig. 9B depicts a simplified flowchart depicting processing that may be performed to compute the overage of one or more resources in accordance with an embodiment of the invention.

Fig. 10 is a high level block diagram of a system for processing a customer's subscription order, in accordance with one embodiment of the invention.

Fig. 11A depicts a simplified flowchart depicting processing that may be performed by the order workflow identification module in the TAS module to process a subscription order using primary and secondary order workflows, in accordance with an embodiment of the present invention.

Fig. 11B discusses an example of how one or more secondary steps in a secondary order workflow may be executed in relationship with one or more primary steps in a primary order workflow to process a customer's subscription order according to an embodiment of the present invention.

Fig. 11C is a high level flowchart illustrating a method for executing steps for processing a subscription order using a primary order workflow in accordance with one embodiment of the present invention.

Fig. 12A is a logical view of the assignment of security zones to various components in the cloud infrastructure system in accordance with one embodiment of the present invention.

Fig. 12B illustrates a security zone-based security infrastructure according to an embodiment of the present invention.

Fig. 13 depicts a simplified flowchart depicting processing that may be performed by security infrastructure in cloud infrastructure system, in accordance with an embodiment of the present invention.

Fig. 14 is a simplified block diagram of a computing system 1400 that may be used in accordance with embodiments of the present invention.

Fig. 15 is a simplified block diagram of an electronic device 1500 in accordance with embodiments of the present invention.

DETAILED DESCRIPTION

In the following description, for the purposes of explanation, specific details are set forth in order to provide a thorough understanding of embodiments of the invention. However, it will be apparent that various embodiments may be practiced without these specific details. The figures and description are not intended to be restrictive.

Certain embodiments of the present invention provide techniques for automating the provisioning, managing and tracking of services provided by a cloud infrastructure system.

In certain embodiments, a cloud infrastructure system may include a suite of applications, middleware and database service offerings that are delivered to a customer in a self-service, subscription-based, elastically scalable, reliable, highly available, and secure manner. An example of such a cloud infrastructure system is the Oracle Public Cloud provided by the present assignee.

A cloud infrastructure system may provide many capabilities including, but not limited to, provisioning, managing and tracking a customer's subscription for services and resources in the cloud infrastructure system, providing predictable operating expenses to customers utilizing the services in the cloud infrastructure system, providing robust identity domain separation and protection of a customer's data in the cloud infrastructure system, providing customers with a transparent architecture and control of the design of the cloud infrastructure system, providing customers assured data protection and compliance with data privacy standards and regulations, providing customers with an integrated development experience for building and deploying services in the cloud infrastructure system and providing customers with a seamless integration between business software, middleware, database and infrastructure services in the cloud infrastructure system.

In certain embodiments, services provided by the cloud infrastructure system may include a host of services that are made available to users of the cloud infrastructure system on demand such as online data storage and backup solutions, Web-based e-mail services, hosted office suites and document collaboration services, database processing, managed technical support services and the like. Services provided by the cloud infrastructure system can dynamically scale to meet the needs of its users. A specific instantiation of a service provided by cloud infrastructure system is referred to herein as a service instance. In general, any service made available to a user via a communication network such as the Internet from a cloud service provider's system is referred to as a cloud service. Typically, in a public cloud environment, servers and systems that make up the cloud service provider's system are different from the customer's own on-premises servers and systems. For example, a cloud service provider's system may host an application and a user may, via a communication network such as the Internet, on demand, order and use the application.

A service in a computer network cloud infrastructure includes protected computer network access to storage, a hosted database, a hosted web server, a software application, or other service provided by a cloud vendor to a user, or as otherwise known in the art. For example, a service can include password-protected access to remote storage on the cloud through the Internet. As another example, a service can include a web service-based hosted relational database and script-language middleware engine for private use by a networked developer. As another example, a service can include access to an email software application hosted on a cloud vendor's web site.

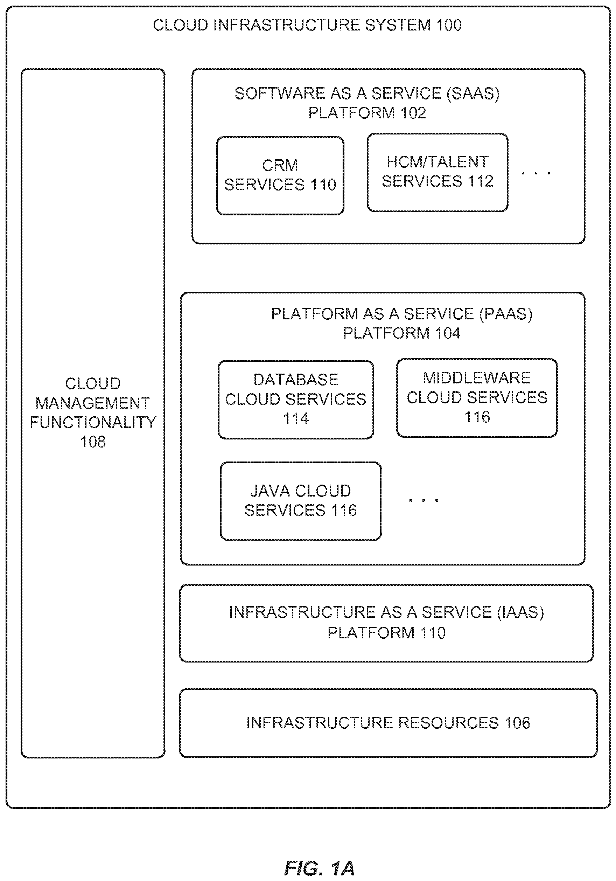

Fig. 1A is a logical view of a cloud infrastructure system according to one embodiment of the present invention. Cloud infrastructure system 100 may provide a variety of services via a cloud or networked environment. These services may include one or more services provided under Software as a Service (SaaS) category, Platform as a Service (PaaS) category, Infrastructure as a Service (Iaas) category, or other categories of services including hybrid services. A customer, via a subscription order, may order one or more services provided by cloud infrastructure system 100. Cloud infrastructure system 100 then performs processing to provide the services in the customer's subscription order.

Cloud infrastructure system 100 may provide the cloud services via different deployment models. For example, services may be provided under a public cloud model where cloud infrastructure system 100 is owned by an organization selling cloud services (e.g., owned by Oracle) and the services are made available to the general public or different industry enterprises. As another example, services may be provided under a private cloud model where cloud infrastructure system 100 is operated solely for a single organization and may provide services for one or more entities within the organization. The cloud services may also be provided under a community cloud model where cloud infrastructure system 100 and the services provided by system 100 are shared by several organizations in a related community. The cloud services may also be provided under a hybrid cloud model, which is a combination of two or more different models.

As shown in Fig. 1A, cloud infrastructure system 100 may comprise multiple components, which working in conjunction, enable provision of services provided by cloud infrastructure system 100. In the embodiment illustrated in Fig. 1A, cloud infrastructure system 100 includes a SaaS platform 102, a PaaS platform 104, an IaaS platform 110, infrastructure resources 106, and cloud management functionality 108. These components may be implemented in hardware, or software, or combinations thereof.

SaaS Platform 102 is configured to provide cloud services that fall under the SaaS category. For example, SaaS platform 102 may provide capabilities to build and deliver a suite of on-demand applications on an integrated development and deployment platform. SaaS platform 102 may manage and control the underlying software and infrastructure for providing the SaaS services. By utilizing the services provided by SaaS Platform 102, customers can utilize applications executing on cloud infrastructure system 100. Customers can acquire the application services without the need for customers to purchase separate licenses and support.

Various different SaaS services may be provided. Examples include without limitation services that provide solutions for sales performance management, enterprise integration and business flexibility for large organizations, and the like. In one embodiment, the SaaS services may include Customer Relationship Management (CRM) services 110 (e.g., Fusion CRM services provided by the Oracle cloud), Human Capital Management (HCM)/Talent Management services 112, and the like. CRM services 110 may include services directed to resorting and management of a sales activity cycle to a customer, and others. HCM/Talent services 112 may include services directed to providing global workforce lifecycle management and talent management services to a customer.

Various different PaaS services may be provided by PaaS platform 104 in a standardized, shared and elastically scalable application development and deployment platform. Examples of PaaS services may include without limitation services that enable organizations (such as Oracle) to consolidate existing applications on a shared, common architecture, as well as the ability to build new applications that leverage the shared services provided by the platform. PaaS platform 104 may manage and control the underlying software and infrastructure for providing the PaaS services. Customers can acquire the PaaS services provided by cloud infrastructure system 100 without the need for customers to purchase separate licenses and support. Examples of PaaS services include without limitation Oracle Java Cloud Service (JCS), Oracle Database Cloud Service (DBCS), and others.

By utilizing the services provided by PaaS platform 104, customers can utilize programming languages and tools supported by cloud infrastructure system 100 and also control the deployed services. In some embodiments, PaaS services provided by the cloud infrastructure system 100 may include database cloud services 114, middleware cloud services (e.g., Oracle Fusion Middleware services) 116 and Java cloud services 117. In one embodiment, database cloud services 114 may support shared service deployment models that enable organizations to pool database resources and offer customers a database-as-a-service in the form of a database cloud, middleware cloud services 116 provides a platform for customers to develop and deploy various business applications and Java cloud services 117 provides a platform for customers to deploy Java applications, in the cloud infrastructure system 100. The components in SaaS platform 102 and PaaS platform 104 illustrated in Fig. 1A are meant for illustrative purposes only and are not intended to limit the scope of embodiments of the present invention. In alternate embodiments, SaaS platform 102 and PaaS platform 104 may include additional components for providing additional services to the customers of cloud infrastructure system 100.

Various different IaaS services may be provided by IaaS platform 110. The IaaS services facilitate the management and control of the underlying computing resources such as storage, networks, and other fundamental computing resources for customers utilizing services provided by the SaaS platform and the PaaS platform.

In certain embodiments, cloud infrastructure system 100 includes infrastructure resources 106 for providing the resources used to provide various services to customers of the cloud infrastructure system 100. In one embodiment, infrastructure resources 106 includes pre-integrated and optimized combinations of hardware such as servers, storage and networking resources to execute the services provided by the PaaS platform and the SaaS Platform.

In certain embodiments, cloud management functionality 108 provides comprehensive management of cloud services (e.g., SaaS, PaaS, IaaS services) in the cloud infrastructure system 100. In one embodiment, cloud management functionality 108 includes capabilities for provisioning, managing and tracking a customer's subscription received by the cloud infrastructure system 100, and the like.

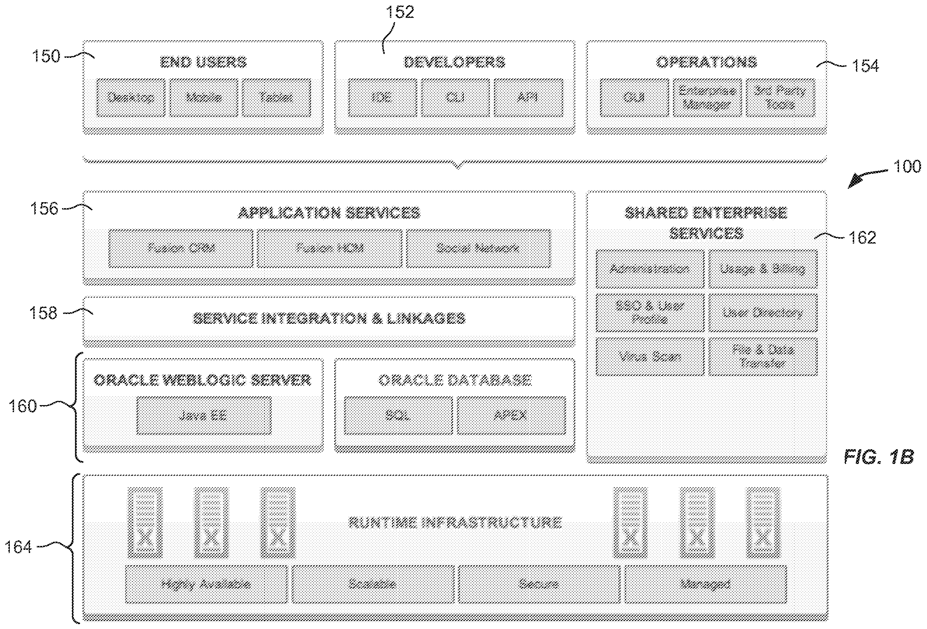

Fig. 1B is a simplified block diagram of a hardware/software stack that may be used to implement cloud infrastructure system 100 according to an embodiment of the present invention. It should be appreciated that implementation depicted in Fig. 1B may have other components than those depicted in Fig. 1B. Further, the embodiment shown in Fig. 1B is only one example of a cloud infrastructure system that may incorporate an embodiment of the invention. In some other embodiments, cloud infrastructure system 100 may have more or fewer components than shown in Fig. 1B, may combine two or more components, or may have a different configuration or arrangement of components. In certain embodiments, the hardware and software components are stacked so as to provide vertical integration that provides optimal performance.

Various types of users may interact with cloud infrastructure system 100. These users may include, for example, end users 150 that can interact with cloud infrastructure system 100 using various client devices such as desktops, mobile devices, tablets, and the like. The users may also include developers/programmers 152 who may interact with cloud infrastructure system 100 using command line interfaces (CLIs), application programming interfaces (APIs), through various integrated development environments (IDEs), and via other applications. User may also include operations personnel 154. These may include personnel of the cloud service provider or personnel of other users.

Application services layer 156 identifies various cloud services that may be offered by cloud infrastructure system 100. These services may be mapped to or associated with respective software, components 160 (e.g., Oracle WebLogic server for providing Java services, oracle database for providing database services, and the like) via a service integration and linkages layer 158.

In certain embodiments, a number of internal services 162 may be provided that are shared by different components or modules of cloud infrastructure system 100 and by the services provided by cloud infrastructure system 100. These internal shared services may include, without limitation, a security and identity service, an integration service, an enterprise repository service, an enterprise manager service, a virus scanning and white list service, a high availability, backup and recovery service, service for enabling cloud support in IDEs, an email service, a notification service, a file transfer service, and the like.

Runtime infrastructure layer 164 represents the hardware layer on which the various other layers and components are built. In certain embodiments, runtime infrastructure layer 164 may comprise one Oracle's Exadata machines for providing storage, processing, and networking resources. An Exadata machine may be composed of various database servers, storage Servers, networking resources, and other components for hosting cloud-services related software layers. In certain embodiments, the Exadata machines may be designed to work with Oracle Exalogic, which is an engineered system providing an assemblage of storage, compute, network, and software resources. The combination of Exadata and Exalogic provides a complete hardware and software engineered solution that delivers high-performance, highly available, scalable, secure, and a managed platform for providing cloud services.

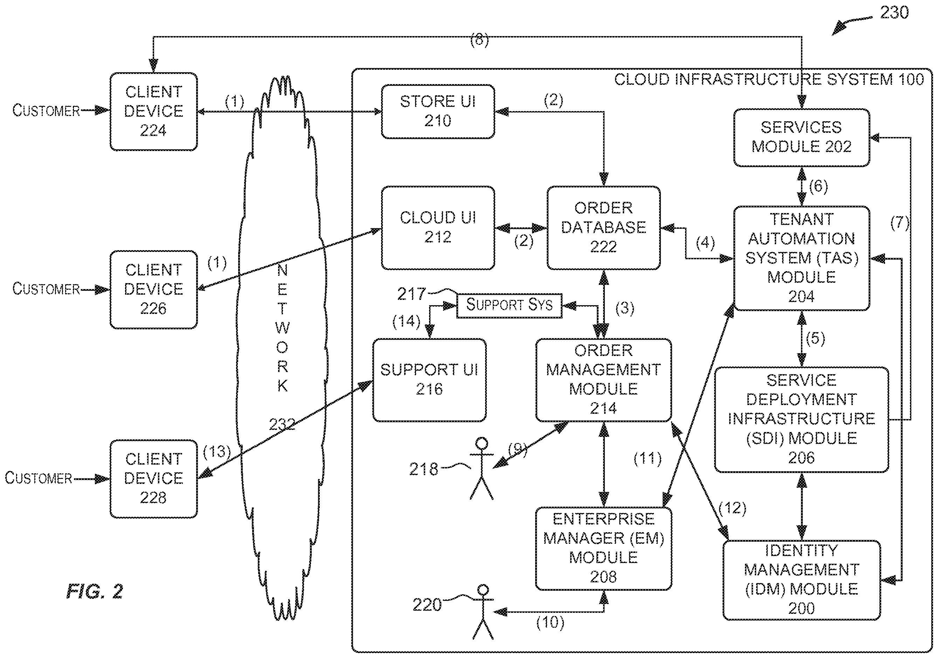

Fig. 2 is a simplified block diagram of a system environment for implementing the cloud infrastructure system shown in Fig. 1A according to an embodiment of the present invention. In the illustrated embodiment, system environment 230 includes one or more client computing devices 224, 226 and 228 that may be used by users to interact with cloud infrastructure system 100. A client device may be configured to operate a client application such as a web browser, a proprietary client application (e.g., Oracle Forms), or some other application, which may be used by a user of the client device to interact with cloud infrastructure system 100 to utilize services provided by cloud infrastructure system 100.

It should be appreciated that cloud infrastructure system 100 depicted in Fig. 2 may have other components than those depicted in Fig. 2. Further, the embodiment shown in Fig. 2 is only one example of a cloud infrastructure system that may incorporate an embodiment of the invention. In some other embodiments, cloud infrastructure system 100 may have more or fewer components than shown in Fig. 2, may combine two or more components, or may have a different configuration or arrangement of components.

Client computing devices 224, 226 and 228 may be general purpose personal computers (including, by way of example, personal computers and/or laptop computers running various versions of Microsoft Windows and/or Apple Macintosh operating systems), cell phones or PDAs (running software such as Microsoft Windows Mobile and being Internet, e-mail, SMS, Blackberry, or other communication protocol enabled), workstation computers running any of a variety of commercially-available UNIX or UNIX-like operating systems (including without limitation the variety of GNU/Linux operating systems), or any other computing device. For example, client computing devices 224, 226 and 228 may be any other electronic device, such as a thin-client computer, Internet-enabled gaming system, and/or personal messaging device, capable of communicating over a network (e.g., network 232 described below). Although exemplary system environment 230 is shown with three client computing devices, any number of client computing devices may be supported. Other devices such as devices with sensors, etc. may interact with cloud infrastructure system 100.

A network 232 may facilitate communications and exchange of data between clients 224, 226 and 228 and cloud infrastructure system 100. Network 232 may be any type of network familiar to those skilled in the art that can support data communications using any of a variety of commercially-available protocols, including without limitation TCP/IP, SNA, IPX, AppleTalk, and the like. Merely by way of example, network 232 can be a local area network (LAN) such as an Ethernet network, a Token-Ring network and/or the like, a wide-area network, a virtual network, including without limitation a virtual private network (VPN), the Internet, an intranet, an extranet, a public switched telephone network (PSTN), an infra-red network, a wireless network (e.g., a network operating under any of the IEEE 802.1X suite of protocols, the Bluetooth protocol known in the art, and/or any other wireless protocol), and/or any combination of these and/or other networks.

Cloud infrastructure system 100 may comprise one or more computers and/or servers which may be general purpose computers, specialized server computers (including, by way of example, PC servers, UNIX servers, mid-range servers, mainframe computers, rack-mounted servers, etc.), server farms, server clusters, or any other appropriate arrangement and/or combination. The computing devices that make up cloud infrastructure system 100 may run any of operating systems or a variety of additional server applications and/or mid-tier applications, including HTTP servers, FTP servers, CGI servers, Java servers, database servers, and the like. Exemplary database servers include without limitation those commercially available from Oracle, Microsoft, Sybase, IBM and the like.

In various embodiments, cloud infrastructure system 100 may be adapted to automatically provision, manage and track a customer's subscription to services offered by cloud infrastructure system 100. In one embodiment, as depicted in Fig. 2, the components in cloud infrastructure system 100 include an Identity Management (IDM) module 200, a services module 202, a Tenant Automation System (TAS) module 204, a Service Deployment Infrastructure (SDI) module 206, an Enterprise Manager (EM) module 208, one or more front-end web interfaces such as a store user interface (UI) 210, a cloud user interface (UI) 212, and a support user interface (UI) 216, an order management module 214, sales personnel 218, operator personnel 220 and an order database 222. These modules may include or be provided using one or more computers and/or servers which may be general purpose computers, specialized server computers, server farms, server clusters, or any other appropriate arrangement and/or combination. In one embodiment, one or more of these modules can be provided by cloud management functionality 108 or IaaS platform 110 in cloud infrastructure system 100. The various modules of the cloud infrastructure system 100 depicted in Fig. 2 are meant for illustrative purposes only and are not intended to limit the scope of embodiments of the present invention. Alternative embodiments may include more or fewer modules than those shown in Fig. 2.

In an exemplary operation, at (1) a customer using a client device such as client device 224 or 226 may interact with cloud infrastructure system 100 by browsing the various services provided by cloud infrastructure system 100 and placing an order for a subscription for one or more services offered by cloud infrastructure system 100. In certain embodiments, the customer may access store UI 210 or cloud UI 212 and place a subscription order via these user interfaces.

The order information received by cloud infrastructure system 100 in response to the customer placing an order may include information identifying the customer and one or more services offered by the cloud infrastructure system 100 that the customer intends to subscribe to. A single order may include orders for multiple services. For instance, a customer may login to cloud UI 212 and request a subscription for a CRM service and a Java cloud service in the same order.

Additionally, the order may also include one or more service levels for the ordered services. As used herein, and as will be discussed in greater detail below, a service level for a service determines the amount of resources to be allocated for providing the requested service in the context of the subscription, such as the amount of storage, amount of computing resources, data transfer facilities, and the like. For example, a basic service level may provide a minimum level of storage, data transmission, or number of users, and higher service levels may include additional resources.

In addition, in some instances, the order information received by cloud infrastructure system 100 may include information indicative of a customer level, and the time period during which the service is desired. The customer level specifies the priority of the customer making the subscription request. In one example, the priority may be determined based on the quality of service that the cloud infrastructure system 100 guarantees or promises the customer as specified by a Service Level Agreement (SLA) agreed to between the customer and the provider of the cloud services. In one example, the different customer levels include a basic level, a silver level and a gold level. The time period for a service may specify the start date and time for the service and the time period for which the service is desired (e.g., a service end date and time may be specified).

In one embodiment, a customer may request a new subscription via store UI 210 or request for a trial subscription via cloud UI 212. In certain embodiments, store UI 210 may represent the service provider's eCommerce store front (e.g., www.oracle.com/store for Oracle Cloud services). Cloud UI 212 may represent a business interface for the service provider. Consumer can explore available services and sign up for interested services through cloud UI 212. Cloud UI 212 captures user input necessary for ordering trial subscriptions provided by cloud infrastructure system 100. Cloud UI 212 may also be used to view account features and configure the runtime environment located within cloud infrastructure system 100. In addition to placing an order for a new subscription, store UI 210 may also enable the customer to perform other subscription-related tasks such as changing the service level of a subscription, extending the term of the subscription, increasing the service level of a subscription, terminating an existing subscription, and the like.

After an order has been placed per (1), at (2), the order information that is received via either store UI 210 or cloud UI 212 is stored in order database 222, which can be one of several databases operated by cloud infrastructure system 100 and utilized in conjunction with other system elements. While order database 222 is shown logically as a single database in Fig. 2, in actual implementation, this may comprise one or more databases.

At (3), the order is forwarded to order management module 214. Order management module 214 is configured to perform billing and accounting functions related to the order such as verifying the order and upon verification, booking the order. In certain embodiments, order management module 214 may include a contract management module and an install base module. The contract management module may store contract information associated with the customer's subscription order such as the customer's service level agreement (SLA) with cloud infrastructure system 100. The install base module may include detailed descriptions of the services in the customer's subscription order. In addition to order information, the install base module may track installation details related to the services, product status and support service history related to the services. As a customer orders new services or upgrades existing ones, the install base module may automatically add new order information.

At (4), information regarding the order is communicated to TAS module 204. In one embodiment, TAS module 204 utilizes the order information to orchestrate the provisioning of services and resources for the order placed by the customer. At (5), TAS component 204 orchestrates the provisioning of resources to support the subscribed services using the services of SDI module 206. At (6) TAS module 204 provides information related to the provisioned order received from SDI module 206 to services module 202. In some embodiments, at (7), SDI module 206 may also use services provided by services module 202 to allocate and configure the resources needed to fulfill the customer's subscription order.

At (8), services module 202 sends a notification to the customers on client devices 224, 226 and 228 regarding the status of the order.

In certain embodiments, TAS module 204 functions as an orchestration component that manages business processes associated with each order and applies business logic to determine whether an order should proceed to provisioning. In one embodiment, upon receiving an order for a new subscription, TAS module 204 sends a request to SDI module 206 to allocate resources and configure those resources needed to fulfill the subscription order. SDI module 206 enables the allocation of resources for the services ordered by the customer. SDI module 206 provides a level of abstraction between the cloud services provided by cloud infrastructure system 100 and the physical implementation layer that is used to provision the resources for providing the requested services. TAS module 204 may thus be isolated from implementation details such as whether or not services and resources are actually provisioned on the fly or pre-provisioned and only allocated/assigned upon request.

In certain embodiments, a user may use store UI 210 to directly interact with order management module 214 to perform billing and accounting related functions such as verifying the order and upon verification, booking the order. In some embodiments, instead of a customer placing an order, at (9), the order may instead be placed by sales personnel 218 on behalf of the customer such as a customer's service representative or sales representative. Sales personnel 218 may directly interact with order management module 214 via a user interface (not shown in Fig. 2) provided by order management module 214 for placing orders or for providing quotes for the customer. This, for example, may be done for large customers where the order may be placed by the customer's sales representative through order management module 214. The sales representative may set up the subscription on behalf of the customer.

EM module 208 is configured to monitor activities related to managing and tracking a customer's subscription in cloud infrastructure system 100. EM module 208 collects usage statistics for the services in the subscription order such as the amount of storage used, the amount data transferred, the number of users, and the amount of system up time and system down time. At (10), a host operator personnel 220, who may be an employee of a provider of cloud infrastructure system 100, may interact with EM module 208 via an enterprise manager user interface (not shown in Fig. 2) to manage systems and resources on which services are provisioned within cloud infrastructure system 100.

Identity management (IDM) module 200 is configured to provide identity services such as access management and authorization services in cloud infrastructure system 100. In one embodiment, IDM module 200 controls information about customers who wish to utilize the services provided by cloud infrastructure system 100. Such information can include information that authenticates the identities of such customers and information that describes which actions those customers are authorized to perform relative to various system resources (e.g., files, directories, applications, communication ports, memory segments, etc.) IDM module 200 can also include the management of descriptive information about each customer and about how and by whom that descriptive information can be accessed and modified.

In one embodiment, information managed by the identity management module 200 can be partitioned to create separate identity domains. Information belonging to a particular identity domain can be isolated from all other identity domains. Also, an identity domain can be shared by multiple separate tenants. Each such tenant can be a customer subscribing to services in the cloud infrastructure system 100. In some embodiments, a customer can have one or many identity domains, and each identity domain may be associated with one or more subscriptions, each subscription having one or many services. For example, a single customer can represent a large entity and identity domains may be created for divisions/departments within this large entity. EM module 208 and IDM module 200 may in turn interact with order management module 214 at (11) and (12) respectively to manage and track the customer's subscriptions in cloud infrastructure system 100.

In one embodiment, at (13), support services may also be provided to the customer via a support UI 216. In one embodiment, support UI 216 enables support personnel to interact with order management module 214 via a support backend system to perform support services at (14). Support personnel in the cloud infrastructure system 100 as well as customers can submit bug reports and check the status of these reports via support UI 216.

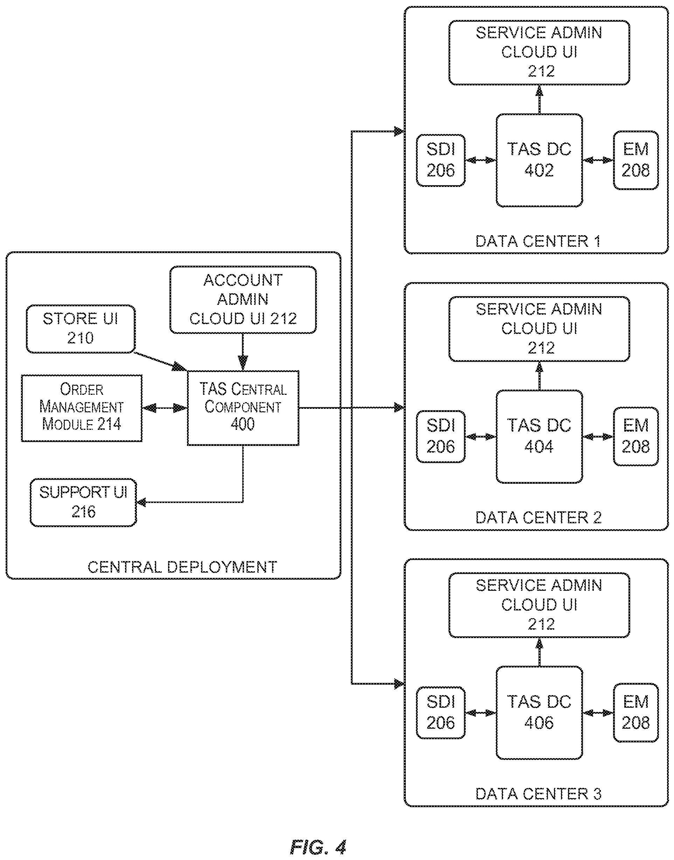

Other interfaces, not shown in Fig. 2 may also be provided by cloud infrastructure system 100. For example, an identity domain administrator may use a user interface to IDM module 200 to configure domain and user identities. In addition, customers may log into a separate interface for each service they wish to utilize. In certain embodiments, a customer who wishes to subscribe to one or more services offered by cloud infrastructure system 100 may also be assigned various roles and responsibilities. In one embodiment, the different roles and responsibilities that may be assigned for a customer may include that of a buyer, an account administrator, a service administrator, an identity domain administrator or a user who utilizes the services and resources offered by cloud infrastructure system 100. The different roles and responsibilities are described more fully in Fig. 4 below.

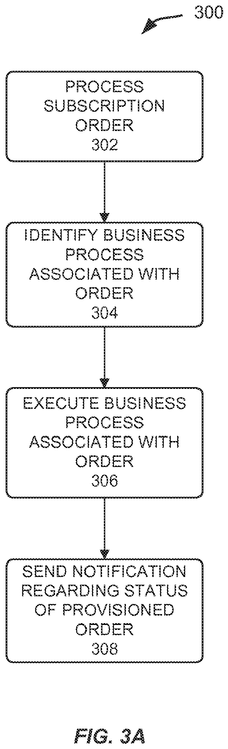

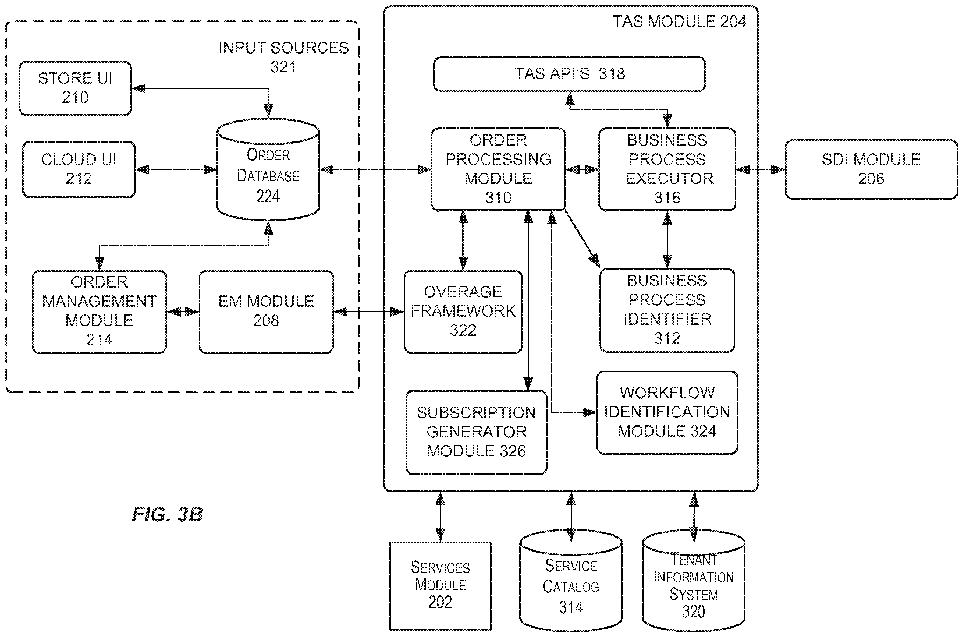

Fig. 3A depicts a simplified flowchart 300 depicting processing that may be performed by the TAS module in the cloud infrastructure system, in accordance with an embodiment of the present invention. The processing depicted in Fig. 3A may be implemented in software (e.g., code, instructions, program) executed by one or more processors, hardware, or combinations thereof. The software may be stored in memory (e.g., on a memory device, on a non-transitory computer-readable storage medium). The particular series of processing steps depicted in Fig. 3A is not intended to be limiting. Other sequences of steps may also be performed according to alternative embodiments. For example, alternative embodiments of the present invention may perform the steps outlined above in a different order. Moreover, the individual steps illustrated in Fig. 3A may include multiple sub-steps that may be performed in various sequences as appropriate to the individual step. Furthermore, additional steps may be added or removed depending on the particular applications. One of ordinary skill in the art would recognize many variations, modifications, and alternatives. In one embodiment, the processing depicted in Fig. 3A may be performed by one or more components in TAS component 204 as will be described in detail in Fig. 3B.

At 302, a customer's subscription order is processed. The processing may include validating the order, in one example. Validating the order includes ensuring that the customer has paid for the subscription and ensuring that the customer does not already have subscriptions with the same name or that the customer is not attempting to create multiple subscriptions of the same type in the same identity domain for subscription types for which this is disallowed (such as, in the case of a CRM service). Processing may also include tracking the status of an order for each order that is being processed by cloud infrastructure system 100.

At 304, a business process associated with the order is identified. In some instances, multiple business processes may be identified for an order. Each business process identifies a series of steps for processing various aspects of the order. As an example, a first business process may identify one or more steps related to provisioning physical resources for the order, a second business process may identify one or more steps related to creating an identity domain along with customer identities for the order, a third business process may identify one or more steps for related to performing back office functions such as creating a customer record for the user, performing accounting functions related to the order, and the like. In certain embodiments, different business processes may also be identified for processing different services in an order. For example, different business process may be identified to process a CRM service and a database service.

At 306, the business process identified for the order in 304 is executed. Executing the business process associated with the order may include orchestrating the series of steps associated with the business process identified in step 304. For example, executing a business process related to provisioning physical resources for the order may include sending a request to SDI module 206 to allocate resources and configure those resources needed to fulfill the subscription order.

At 308, a notification is sent to the customer regarding the status of the provisioned order. Additional description related to performing steps 302, 304, 306 and 308 is provided in detail in Fig. 3B.

Fig. 3B depicts a simplified high level diagram of one or more sub-modules in the TAS module in the cloud infrastructure system, in accordance with an embodiment of the present invention. In one embodiment, the modules depicted in Fig. 3B perform the processing described in steps 302-308 discussed in Fig. 3A. In the illustrated embodiment, TAS module 204 comprises an order processing module 310, a business process identifier 312, a busines process executor 316, an overage framework 322, a workflow identification module 324, and a bundled subscription generator module 326. These modules may be implemented in hardware, or software, or combinations thereof. The various modules of the TAS module depicted in Fig. 3B are meant for illustrative purposes only and are not intended to limit the scope of embodiments of the present invention. Alternative embodiments may include more or fewer modules than those shown in Fig. 3B.

In one embodiment, order processing module 310 receives an order from a customer from one or more input sources 321. For example, order processing module 310 may directly receive an order via cloud UI 212 or store UI 210, in one embodiment. Alternatively, order processing module 310 may receive an order from order management module 214 or order database 222. Order processing module 310 then processes the order. In certain embodiments, processing the order includes generating a customer record which includes information about the order such as a service type, a service level, a customer level, the type of resources, the amount of the resources to be allocated to the service instance and a time period during which the service is desired. As part of the processing, order processing module 310 also determines whether the order is a valid order. This includes ensuring that the customer does not already have subscriptions with the same name or that the customer is not attempting to create multiple subscriptions of the same type in the same identity domain for subscription types where this is disallowed (such as, in the case of a fusion CRM service).

Order processing module 310 may also perform additional processing on the order. Processing may include tracking the status of an order for each order that is being processed by cloud infrastructure system 100. In one embodiment, order processing module 310 may process each order to identify a number of states pertaining to the order. In one example, the different states of an order may be an initialized state, a provisioned state, an active state, an administration required state, an error state, and the like. An initialized state refers to the state of a new order; a provisioned state refers to the state of an order once the services and resources for the order have been provisioned. An order is in an active state when the order has been processed by TAS module 204 and a notification to that effect has been delivered to the customer. An order is in an administration required state when intervention by an administrator is needed to resolve the issue. The order is in an error state when the order cannot be processed. In addition to maintaining the order progress status, order processing module 310 also maintains detailed information about any failures encountered during process execution. In other embodiments, and as will be discussed in detail below, the additional processing performed by order processing module 310 may also include changing the service level for a service in the subscription, changing the services included in the subscription, extending the time period of the subscription, and canceling the subscription or specifying different service levels for different time periods in the subscription.

After an order has been processed by order processing module 310, business logic is applied to determine whether the order should proceed to provisioning. In one embodiment, as part of orchestrating the order, business process identifier 312 receives the processed order from order processing module 310 and applies business logic to identify a particular business process to use for the order being processed. In one embodiment, business process identifier 312 may utilize information stored in a service catalog 314 to determine the particular business process to be used for the order. In one embodiment, and as discussed in Fig. 3A, multiple business processes may be identified for an order and each business process identifies a series of steps for processing various aspects of the order. In another embodiment, and as discussed above, different business processes may be defined for different types of services, or combinations of services such as a CRM service or a database service. In one embodiment, service catalog 314 may store information mapping an order to a particular type of business process. Business process identifier 312 may use this information to identify a specific business process for the order being processed.

Once a business process has been identified, business process identifier 312 communicates the particular business process to be executed to business process executor 316. Business process executor 316 then executes steps of the identified business process by operating in conjunction with one or more modules in the cloud infrastructure system 100. In some embodiments, business process executor 316 acts as an orchestrator for performing the steps associated with a business process. For example, the business process executor may interact with order processing module 310 to execute steps in a business process that identifies workflows related to the order, determines the overage of services in the order or identifies service components related to the order.

In one example, business process executor 316 interacts with SDI module 206 to execute steps in a business process for allocating and provisioning resources for services requested in the subscription order. In this example, for each step in the business process, business process executor 316 may send a request to SDI module 206 to allocate resources and configure resources needed to fulfill the particular step. SDI module 206 is responsible for the actual allocation of the resources. Once all the steps of the business processes of an order have been executed, business process executor 316 may send a notification to the customer of the processed order by utilizing the services of services component 202. The notification may include sending an email notification to the customer with details of the processed order. The email notification may also include deployment information related to the order to enable the customer to access the subscribed services.

In certain embodiments, TAS module 204 may provide one or more TAS Application Programming Interfaces (APIs) 318 that enable TAS module 204 to interact with other modules in cloud infrastructure system 100 and for other modules to interact with TAS module 204. For example, the TAS APIs may include a system provisioning API that interacts with SDI module 206 via an asynchronous Simple Object Access Protocol (SOAP) based web services call to provision resources for the customer's subscription order. In one embodiment, TAS module 204 may also utilize the system provisioning API to accomplish system and service instance creation and deletion, switch a service instance to an increased service level, and associate service instances. An example of this is the association of a Java service instance to a fusion applications service instance to allow secure web service communications. The TAS APIs may also include a notification API that interacts with the services module 202 to notify the customer of a processed order. In certain embodiments, the TAS module 204 also periodically propagates subscription information, outages, and notifications (e.g. planned downtime) to services component 202.

In certain embodiments, TAS module 204 periodically receives usage statistics for each of the provisioned services such as the amount of storage used, the amount data transferred, the number of users, and the amount of system up time and system down time from EM module 208. Overage framework 322 utilizes the usage statistics to determine whether over use of a service has occurred, and if so, to determine how much to bill for the overage, and provides this information to order management module 214.

In certain embodiments, TAS module 204 includes an order workflow identification module 324 that is configured to identify one or more workflows associated with processing a customer's subscription order. In certain embodiments, TAS module 204 may include a subscription order generation framework 326 for generating subscription orders for a customer when the customer places a subscription order for one or more services offered by the cloud infrastructure system 100. In one embodiment, a subscription order includes one or more service components responsible for providing the services requested by a customer in the subscription order.

Additionally, TAS module 204 may also interact with one or more additional databases such as a Tenant Information System (TIS) database 320 to enable the provisioning of resources for one or more services subscribed by the customer while taking into consideration historical information, if any, available for the customer. TIS database 320 may include historical order information and historical usage information pertaining to orders subscribed by the customer.

TAS module 204 may be deployed using different deployment models. In certain embodiments, the deployment includes a central component that interfaces with one or more distributed components. The distributed components may, for example, be deployed as various data centers and accordingly may also be referred to as data center components. The central component includes capabilities to process orders and coordinate services in cloud infrastructure system 100, while the data center components provide capabilities for provisioning and operating the runtime system that provides the resources for the subscribed services.

Fig. 4 depicts an exemplary distributed deployment of the TAS module, according to an embodiment of the present invention. In the embodiment depicted in Fig. 4, the distributed deployment of TAS module 204 includes a TAS central component 400 and one or more TAS Data Centers (DCs) components 402, 404 and 406. These components may be implemented in hardware, or software, or combinations thereof.

In one embodiment, the responsibilities of TAS central component 400 include, without limitation, to provide a centralized component for receiving customer orders, performing order-related business operations such as creating a new subscription, changing the service level for a service in the subscription, changing the services included in the subscription, and extending the time period of the subscription, or canceling the subscription. The responsibilities of TAS central component 400 may also include maintaining and serving subscription data needed by cloud infrastructure system 100 and interfacing with order management module 214, support UI 216, cloud UI 212 and store UI 210 to handle all the back-office interactions.

In one embodiment, the responsibilities of TAS DCs 402, 404 and 406 include, without limitation, performing runtime operations for orchestrating the provisioning the resources for one or more services subscribed by the customer. TAS DCs 402, 404 and 406 also include capabilities to perform operations such as locking, unlocking, enabling, or disabling a subscription order, collecting metrics related to the order, determining the status of the order, and sending notification events related to the order.

In an exemplary operation of the distributed TAS system shown in Fig. 4, TAS central component 400 initially receives an order from a customer via cloud UI 212, store UI 210, via order management system 214, or via order database 222. In one embodiment, the customer represents a buyer who has financial information and the authority to order and/or change a subscription. In one embodiment, the order information includes information identifying the customer, the type of services that the customer wishes to subscribe to, and an account administrator who will be responsible for handling the request. In certain embodiments, the account administrator may be nominated by the customer when the customer places an order for a subscription to one or more services offered by cloud infrastructure system 100. Based on the order information, the TAS central component 400 identifies the data region of the world such as Americas, EMEA, or Asia Pacific in which the order originates and the particular TAS DCs (for e.g., 402, 404 or 406) that will be deployed for provisioning the order. In one embodiment, the particular TAS DC (for e.g., from among DCs 402, 404 or 406) that will be deployed for provisioning the order is determined based on the geographical data region in which the request originated.

TAS central component 400 then sends the order request to the particular TAS DC in which to provision services for the order request. In one embodiment, TAS DCs 402, 404 or 406 identify a service administrator and an identity domain administrator responsible for processing the order request at the particular TAS DC. The service administrator and the identity administrator may be nominated by the account administrator identified in the subscription order. TAS DCs 402, 404 or 406 communicate with SDI module 204 to orchestrate the provisioning of physical resources for the order. SDI module 206 in respective TAS DCs 402, 404 or 406 allocates resources and configures those resources needed to fulfill the subscription order.

In certain embodiments, TAS DCs, 402, 404 or 406 identify an identity domain associated with the subscription. SDI module 206 may provide the identity domain information to IDM component 200 (shown in Fig. 2) for identifying an existing identity domain or creating a new identity domain. Once the order is provisioned by the SDI module at respective TAS DCs, 402, 404 or 406, TAS central component 400 may place information, regarding the provisioned resources in a support system, via support UI 216. Information may include, for example, displaying resource metrics related to the services and usage statistics of the services.

Once in operation, at each data center, EM module 208 to periodically collects usage statistics for each of the provisioned services provisioned at that data center, such as the amount of storage used, the amount data transferred, the number of users, and the amount of system up time and system down time. These statistics are provided to the TAS DC that is local to EM module 208 (i.e., at the same data center). In an embodiment, the TAS DCs may use the usage statistics to determine whether overuse of a service has occurred, and if so, to determine how much to bill for the overage, and provide the billing information to order management system 214.

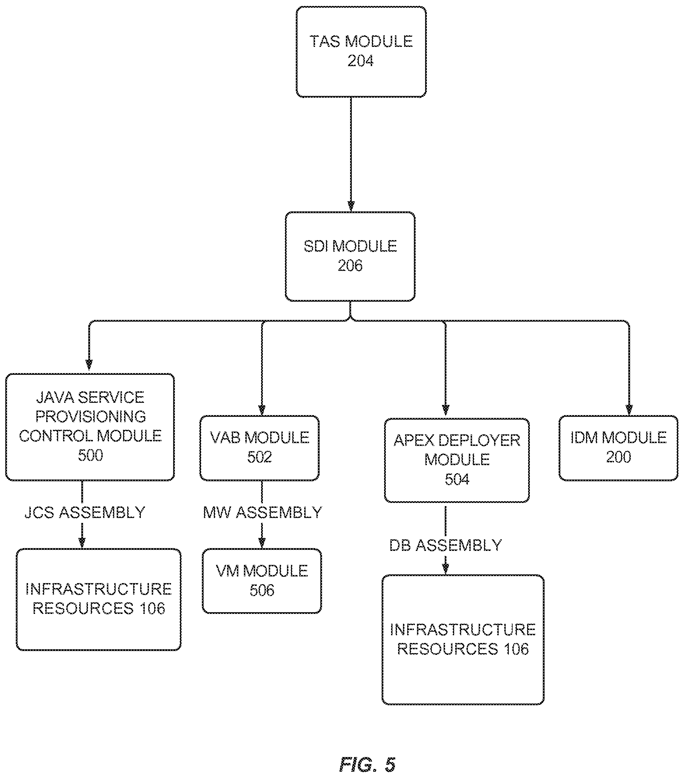

Fig. 5 is a simplified block diagram illustrating the interactions of the SDI module with one or more modules in the cloud infrastructure system, in accordance with an embodiment of the present invention. In one embodiment, SDI module 206 interacts with TAS module 204 to provision resources for services in a subscription order received by TAS module 204. In certain embodiments, one or more of the modules illustrated in Fig. 5 may be modules within cloud infrastructure system 100. In other embodiments, one or more of the modules that interact with SDI module 206 may be outside cloud infrastructure system 100. In addition, alternative embodiments may have more or less modules than those shown in Fig. 5. These modules may be implemented in hardware, or software, or combinations thereof.

In one embodiment, the modules in SDI module 206 may include one or more modules in SaaS platform 102 and PaaS platform 104 in cloud infrastructure system 100. In order to perform provisioning of resources for various services, SDI module 206 may interact with various other modules, each customized to help with provisioning resources for a particular type of service. For example, as illustrated in Fig. 5, SDI module 206 may interact with a Java service provisioning control module 500 to provision Java cloud services. In one embodiment, Java service provisioning control component 500 may deploy a Java Cloud Service (JCS) assembly specified by SDI module 206 that includes a set of tasks to be performed to provision Java cloud services. Infrastructure resources 106 then determines the resources needed to provision the Java cloud services.

As other examples, SDI module 206 may interact with one or more modules such as a Virtual Assembly Builder (VAB) module 502, an Application Express (APEX) deployer module 504, a Virtual Machine (VM) module 506, an IDM module 200, and a database machine module 118. VAB module 502 includes capabilities to configure and provision complete multi-tier application environments. In one embodiment, VAB module 502 deploys a Middleware (MW) service assembly specified by SDI module 206 to provision a MW service in cloud infrastructure system 100 using the services provided by VM module 506. APEX deployer module 504 includes capabilities to configure and provision database services. In one embodiment, APEX deployer module 504 deploys a database service assembly specified by SDI module 206 to provision a database service in cloud infrastructure system 100 using the resources provided by infrastructure resources 106. SDI module 206 interacts with IDM module 200 to provide identity services such as access management across multiple applications in cloud infrastructure system 100.

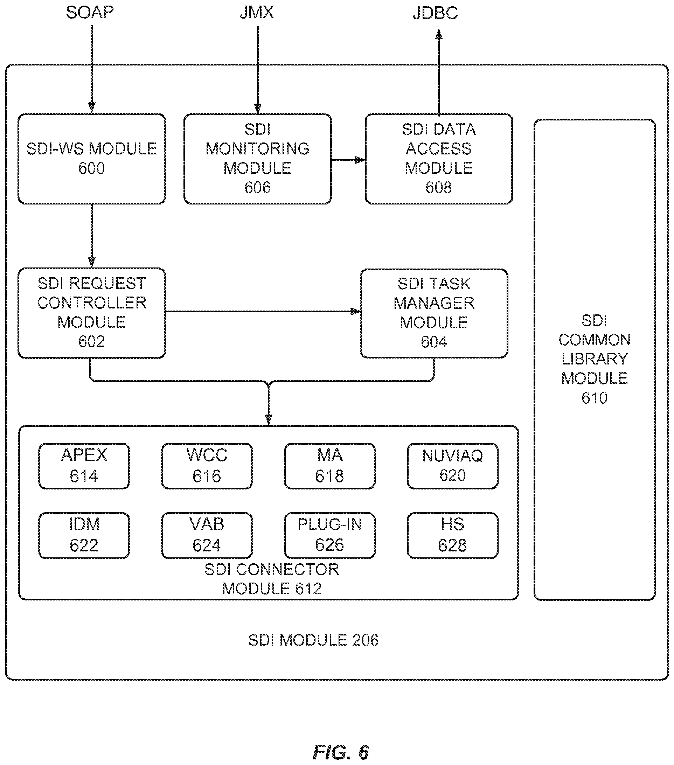

Fig. 6 depicts a simplified high level diagram of sub-modules of the SDI module according to an embodiment of the present invention. In the embodiment depicted in Fig. 6, SDI module 206 includes a SDI-Web Services (WS) module 600, an SKI request controller module 602, an SDI task manager module 604, an SDI monitoring module 606, an SDI data access module 608, an SDI common library module 610, and an SDI connector module 612. These modules may be implemented in hardware, or software, or combinations thereof. SDI module 206 depicted in Fig. 6 and its various modules are meant for illustrative purposes only and are not intended to limit the scope of embodiments of the present invention. Alternative embodiments may have more or less modules than those shown in Fig. 6. These modules and their functions are described in detail below.

SDI-WS module 600 includes capabilities for receiving a step in the business associated with an order from business process executor 316 ofTAS component 204. In one embodiment, SDI-WS module 600 parses each step of the business process and converts the step into an internal representation used by SDI module 206. In one embodiment, each step of the business process associated with the order arrives through a web service processing layer (for example, via System Provisioning API discussed in Fig. 3B) in the forum of a SOAP request to SDI-WS module 600.

SDI request controller module 602 is the internal request processing engine in SDI module 206 and includes capabilities for performing asynchronous request processing, concurrent request processing, concurrent task processing, fault tolerant and recovery and plug-in support related to the order requests. In one embodiment, SDI request controller module 602 accepts each step of the business process associated with the order from SDI-WS module 600 and submits the step to SDI task manager module 604.

SDI task manager module 604 translates each step specified in the business process into a series of tasks for provisioning the particular step. Once the set of tasks for a specific step have been provisioned, SDI task manager module 604 responds to business process executor 316 in TATS module 204 with operation results that includes an order payload with details of the resources provisioned to fulfill the particular step. SDI task manager module 604 repeats this process until all the steps of the particular business process associated with the order are complete.

In certain embodiments, SDI task manager module 604 translates each step specified in the business process into a series of tasks by utilizing the services of SDI connector module 612. SDI connector module 612 includes one or more connectors for handling the deployment of tasks specified by SDI task manager module 604 to provision one or more services related to the order request. In certain embodiments, one or more of the connectors may handle tasks that are specific to a particular service type while other connectors may handle tasks that are common across different service types. In one embodiment, SDI connector module 612 includes a set of connectors (wrapper APIs) that interface with one or more of the external modules (shown in Fig. 5) in cloud infrastructure system 100 to provision the services and resources related to the order request. For example, Application Express (APEX) connector 614 interfaces with APEX deployer module 504 to provision database services. Web Center Connector 616 (WCC) interfaces with a web center module in cloud infrastructure system 100 to provision web services. The web center module is a user engagement platform and includes capabilities for delivering connectivity between people and information in cloud infrastructure system 100.

In certain embodiments, Middleware Applications (MA) connector 618 interfaces with VAB module 502 in cloud infrastructure system 100 to provision middleware application services. NUVIAQ connector 620 interfaces with VAB module 502 to provision Java services. IDM connector 622 interfaces with IDM module 200 to provide identity and access management for users subscribing to services and resources in cloud infrastructure system 100. Virtual Assembly Builder (VAB) connector 624 interfaces with VAB module 502 in cloud infrastructure system 100 to configure and provision complete multi-tier application environments. Plug-in connector 626 interfaces with EM module 208 to manage and monitor the components in cloud infrastructure system 100. HTTP server connector 628 interfaces with one or more web servers in the PaaS platform to provide connection services to users in cloud infrastructure system 100.

SDI monitoring module 606 in SDI module 206 provides an inbound interface for receiving Java Management Extensions (JMX) requests. SDI monitoring module 606 also provides tools for managing and monitoring applications, system objects and devices in cloud infrastructure system 100. SDI-data access module 608 provides an inbound interface for receiving Java Database Connectivity (JDBC) requests. SDI-data access module 608 supports data access and provides object relational mapping, java transaction API services, data access objects, and connection pooling in cloud infrastructure system 100. The SDI-common library module 610 provides configuration support for the modules in SDI module 206.

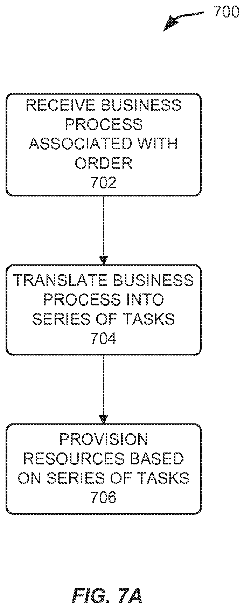

The embodiment of Fig. 6 discussed above describes modules in the SDI module according to an embodiment of the present invention. Fig. 7A depicts a simplified flowchart 700 depicting processing that may be performed by the modules of the SDI module in the cloud infrastructure system, in accordance with an embodiment of the present invention. The processing depicted in Fig. 7A may be implemented in software (e.g., code, instructions, program) executed by one or more processors, hardware, or combinations thereof. The software may be stored in memory (e.g., on a memory device, on a non-transitory computer-readable storage medium). The particular series of processing steps depicted in Fig. 7A is not intended to be limiting. Other sequences of steps may also be performed according to alternative embodiments. For example, alternative embodiments of the present invention may perform the steps outlined above in a different order. Moreover, the individual steps illustrated in Fig. 7A may include multiple sub-steps that may be performed in various sequences as appropriate to the individual step. Furthermore, additional steps may be added or removed depending on the particular applications. One of ordinary skill in the art would recognize many variations, modifications, and alternatives. In one embodiment, the processing depicted in Fig. 7A may be performed by one or more modules in the SDI module 206 discussed in detail in Fig. 6.

At 702, a business process associated with a subscription order is received. In one embodiment, SDI-WS module 600 in SDI module 206 receives one or more steps in the business process associated with the subscription order from business process executor 316. At 704, each step in the business process is translated into a series of tasks for provisioning resources for the subscription order. In one embodiment, SDI task manager module 604 in SDI module 206 translates each step specified in the business process into a series of tasks by utilizing the services of SDI connector module 612. At 706, the subscription order is provisioned based on the series of tasks. In one embodiment, and as discussed in Fig. 6, SDI connector module 612 includes one or more connectors for handling the deployment of tasks specified by SDI task manager module 604 to provision resources for the services in the subscription order.

As described above with respect to Fig. 6, SDI task manager module 604 translates each step specified in a business process into a series of tasks by utilizing the services of SDI connector module 612, which may include one or more connectors for handling the deployment of tasks specified by SDI task manager module 604 to provision one or more services related to the order request. One or more of the connectors may handle tasks that are specific to a particular service type while other connectors may handle tasks that are common across different service types. In one embodiment, SDI connector module 612 includes a set of connectors (wrapper APIs) that interface with one or more of the external modules (shows in Fig. 5) in cloud infrastructure system 100 to provision the services and resources related to the order request. For example, a NUVIAQ connector 620 interfaces with VAB module 502 to provision Java services.

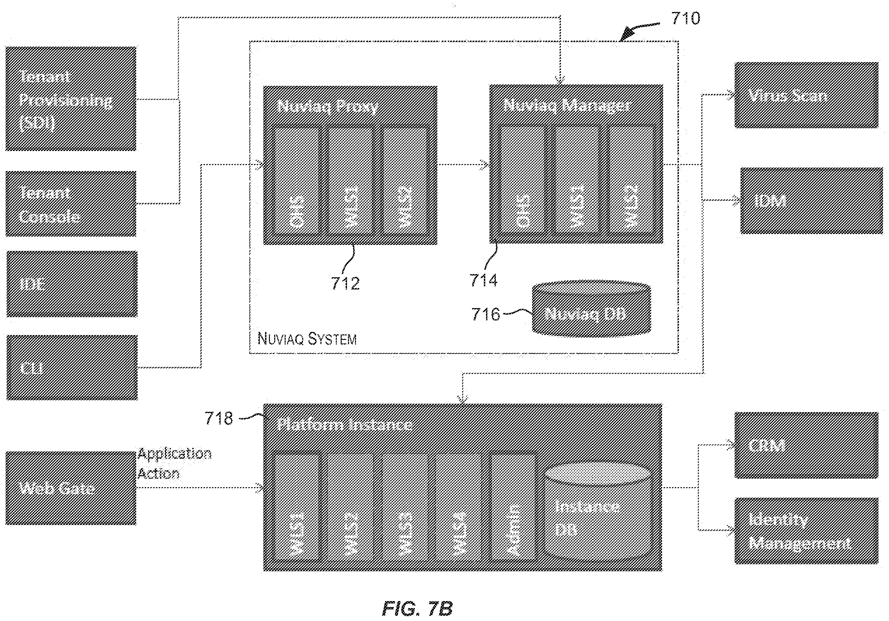

Fig. 7B depicts a simplified block diagram showing the high-level architecture of a Nuviaq system 710 and its relationships with other cloud Infrastructure components according to an embodiment of the present invention. It should be appreciated that Nuviaq system 710 depicted in Fig. 7B may have other components than those depicted in Fig. 7B. Further, the embodiment shown in Fig. 7B is only one example of a cloud infrastructure system that may incorporate an embodiment of the invention. In some other embodiments, Nuviaq system 710 may have more or fewer components than shown in Fig. 7B, may combine two or more components, or may have a different configuration or arrangement of components.

In certain embodiments, Nuviaq system 710 may be configured to provide a runtime engine for orchestrating PaaS operations. Nuviaq system 710 may provide a web service API to facilitate integration with other products and services. Nuviaq system 710 also provides support for complex workflows in system provisioning, application deployment and associated lifecycle operations and integrates with management and monitoring solutions.

In the embodiment depicted in Fig. 7B, Nuviaq system 710 comprises a Nuviaq proxy 712, a Nuviaq manager 714, and a Nuviaq database 716. In certain embodiments, Nuviaq manager 714 provides an entry point into Nuviaq system 710, providing secure access to PaaS operations via the web service API. Infernally, it tracks system state in the database and controls job execution on the workflow engine. In a public cloud, Nuviaq manager 714 may be accessed by the Tenant Provisioning system (SDI 206) and the Tenant Console, to drive provisioning and deployment operations respectively.

In one embodiment, Nuviaq manager 714 executes jobs asynchronously via an internal workflow engine. A job may be a sequence of actions specific to a given PaaS workflow. Actions may be performed in order, with failure in any step resulting in failure of the overall job. Many workflow actions delegate to external systems relevant to the workflow, such as the EM command line interface (cli). In one implementation, Nuviaq manager 714 application may be hosted in a 2-node WebLogic cluster with associated HTTP server (e.g., Oracle HTTP Server or OHS) instance, running inside a firewall.

In certain embodiments, Nuviaq proxy 712 is the public access point to the Nuviaq API. In one embodiment, only Public API may be exposed here. Requests received by proxy 712 may be forwarded to Nuviaq manager 714. In one embodiment, Nuviaq proxy 712 runs outside the firewall, whereas manager 714 runs within the firewall. In one implementation, Nuviaq proxy 712 application runs on a WebLogic cluster running outside the firewall.

In certain embodiments, Nuviaq database 716 tracks various domain entities such as, without limitation, platform instance, deployment plan, application, WebLogic domain, jobs, alerts, and the like. Primary keys may be aligned with the Service Database where appropriate.

In one embodiment, Platform Instance. 718 may contain all resources required for a WebLogic service for a given tenant.

Nuviaq system 710 may rely on additional systems of cloud infrastructure system 100 to carry out the workflow used the WebLogic cloud service. These dependencies may include dependencies on SDI 206, IDM 200, a virus scan system, a service database, CRM instances, and the like. For example, Nuviaq system 710 may depend upon functions performed by an Assembly Deployer in SDI 206. In one embodiment, the Assembly Deployer is a system to manage interactions with OVAB (Oracle Virtual Assembly Builder) and OVM (Oracle Virtual Machine). Capabilities of the Assembly Deployer used by Nuviaq system 710 may include, without limitation, functions for deploying an assembly, un-deploying an assembly, describing assembly deployment, scaling appliance, and the like. In one implementation, Nuviaq system 710 accesses the Assembly Deployed via a web service API.

In certain embodiments, security policies may require certain artifacts to be scanned for viruses before being deployed to an application. Cloud infrastructure system 100 may provide a virus scan system for this purpose that provides scanning as a service for multiple components of the public cloud.

In certain embodiments, a public cloud infrastructure may maintain a Service Database containing information about tenants (e.g., customers) and their service subscriptions. Nuviaq workflows may access to this data in order to properly configure a WebLogic service as a client to other services that the tenant also subscribes to.

Nuviaq system 710 may depend on IDM 200 for its security integration. In certain embodiments, Java Service instances can be associated with a CRM instance. The association allows user applications deployed to their Java Service instance to access a CRM instance though Web Service calls.

Various entities may use services provided by Nuviaq system 710. These clients of Nuviaq system 710 may include: a Tenant Console, which is an management server (e.g., Oracle Management Server) based user interface that customers may access to manage their applications on their platform instances, several IDEs such as Oracle IDEs (JDeveloper, NetBeans, and OEPE) have been extended to offer access to application lifecycle management operations; one or more Command Line Interfaces (CLIs) that are available to access lifecycle operations on the platform instances.

Provisioning use case for Nuviaq system 710 - A Provision Platform Instance use case is realized via the Create Platform Instance operation of the Nuviaq API. In the context of cloud infrastructure system 100, a service instance with respect to the Nuviaq system corresponds to a Nuviaq platform instance. A platform instance is assigned a unique identifier is used on all subsequent operations related to this instance. A Platform Deployment descriptor provided to the Create Platform Instance action allows for properties to be set that modify the configuration of the platform instance to meet the subscription requirements of the tenant. These properties may include for example:

Property #1: oracle.cloud.service.weblogic.size

Values: BASIC, STANDARD, ENTERPRISE
Description: Specifies the subscription type. This impacts the number of servers, database limits and quality of service settings.

Property#2: oracle.cloud.servlce.weblogic.trial

Values: TRUE, FALSE
Description: Indicates whether or not this is a trial subscription.

Properly#3: oracle.cloud.service.weblogic.crm

Values: CRM Service ID
Description: Identifies a CRM service to be associated with this WebLogic service instance.

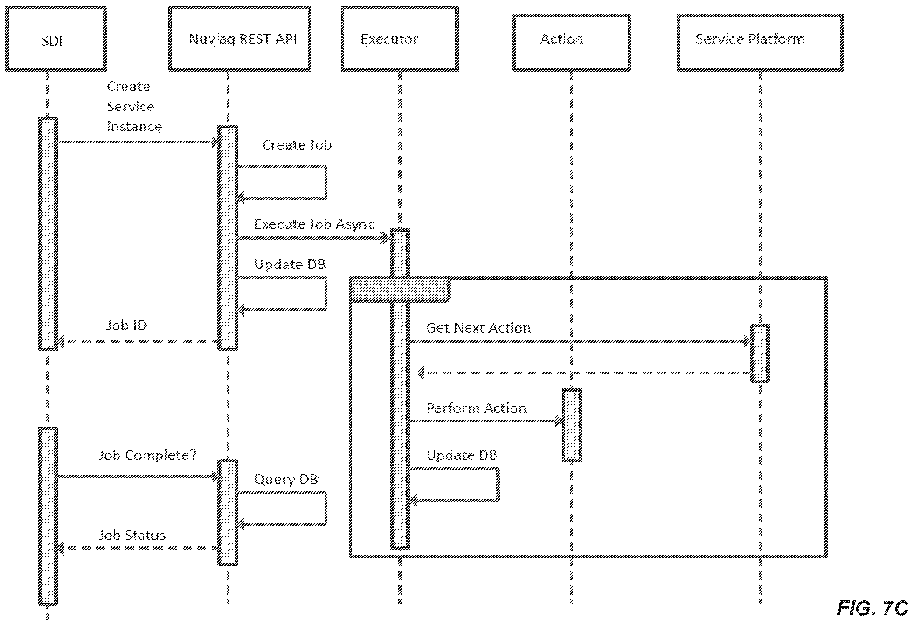

Fig. 7C depicts an example sequence diagram illustrating steps of a provisioning process using a Nuviaq system according to an embodiment of the present invention. The sequence diagram depicted in Fig. 7C is only an example and is not intended to be limiting.

Install/Update Application use case -- The Install Application operation deploys an application to a running WebLogic Server after validating that the application archive meets the security requirements of the Public Cloud. In one embodiment, the Application Deployment descriptor provided to the Install Application action allows for properties to be set that modify the configuration of the application to meet the subscription requirements of the tenant. These properties may include for example:

Property: oracle.cloud.service.weblogic.state
Values: RUNNING, STOPPED
Description: Specifies the initial state of the application after deployment.

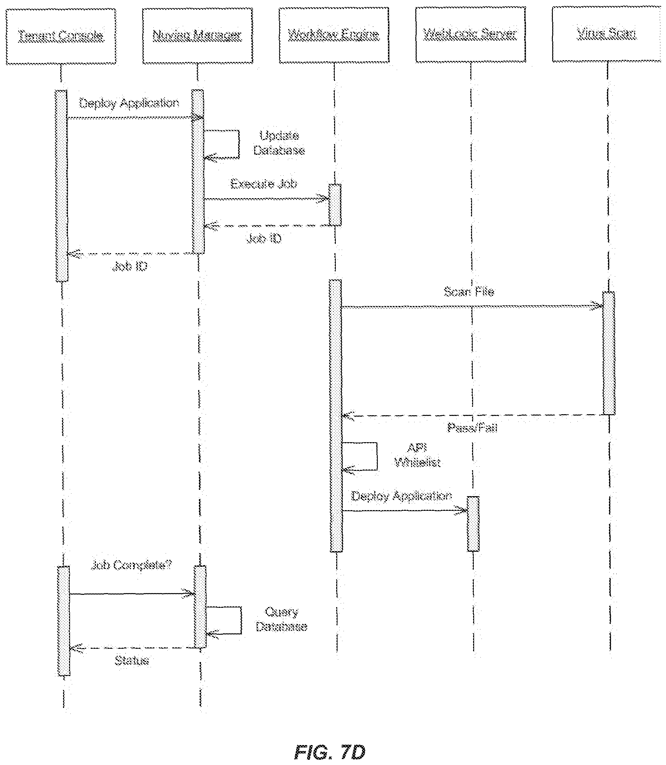

Fig. 7D depicts an example sequence diagram illustrating steps of a deployment process using a Nuviaq system according to an embodiment of the present invention. The sequence diagram depicted in Fig. 7D is only an example and is not intended to be limiting.

Referring back to Fig. 2, in certain embodiments, TAS 204 and SDI 206 working in cooperation are responsible for provisioning resources for one or more services ordered by a customer from a set of services offered by cloud infrastructure system 100. For example, in one embodiment, for provisioning a database service, the automated provisioning flow may be as follows for a paid subscription:

(1) Customer places an order for a paid subscription to a service via Store UI 210.

(2) TAS 204 receives the subscription order.

(3) When services are available TAPS 204 initiates provisioning by using the services of SDI 206. TAS 204 may perform business process orchestration, which will execute the relevant business process to complete the provisioning aspect of the order. In one embodiment, TAS 204 may use a BPEL (Business Process Execution Language) Process Manager to orchestrate the steps involved in the provisioning and handle the lifecycle operations.

(4) In one embodiment, to provision a database service, SDI 206 may call PLSQL APIs in the CLOUD_UI to associate a schema for the requesting customer.

(5) After successful association of a schema to the customer, SDI signals TAS and TAS send a notification to the customer that the database service is now available for use by the customer.

(6) The customer may log into cloud infrastructure system 100 (e.g., using an URAL such as cloud.oracle.com) and activate the service.

In some embodiments, a customer may also be allowed to subscribe to a service on a trial basis. For example, such a trial order may be received via cloud UI 212 (e.g., using cloud.oracle.com).

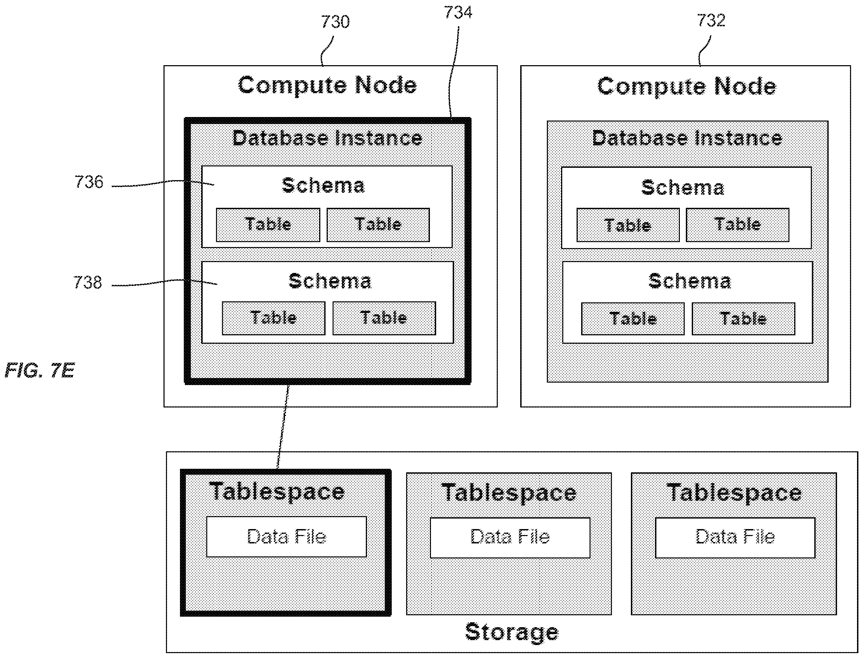

In certain embodiments, cloud Infrastructure system 100 enables underlying hardware and service instances to be shared between customers or tenants. For example, the database service may be provisioned as shown in Fig. 7E in one embodiment. Fig. 7E depicts multiple Exadata compute nodes 730 and 732, each providing a database instance provisioned for the database service. For example, compute node 730 provides a database instance 734 for a database services. Each Exadata compute node may have multiple database instances.

In certain embodiments, each database instance can comprise multiple schemas and the schemas may be associated with different customers or tenants. For example, in Fig. 7E, database instance 734 provides two schemas 736 and 738, each with its own tables. Schema 736 may be associated with a first customer or tenant subscribing to a database service and schema 738 may be associated with a second customer or tenant subscribing to the database service. Each tenant gets a completely isolated schema. Each schema acts like a container that can manage database objects including tables, views, stored procedures, triggers, etc. for the associated tenant. Each schema may have one dedicated tablespace, with each tablespace having one data file.

In this manner, a single database instance can provide database services to multiple tenants. This not only enables sharing of underlying hardware resources but also enables sharing of service instance between tenants.

In certain embodiments, such a multi-tenancy system is facilitated by IDM 200, which beneficially enables multiple separate customers, each having their own separate identity domains, to use hardware and software that is shared in the cloud. Consequently, there is no need for each customer to have its own dedicated hardware or software, resources, and in some cases resources that are not being used by some customers at a particular moment can be used by other customers, thereby preventing those resources from being wasted. For example, as depicted in Fig. 7E, a database instance can service multiple customers each with their respective identity domains. Although each such database service instance can be a separate abstraction or view of a single physical multi-tenant database system that is shared among the many separate identity domains, each such database service instance can have a separate and potentially different schema than each other database service instance has. Thus, the multi-tenant database system can store mappings between customer-specified database schemas and the identity domains to which those database schemas pertain. The multi-tenant database system can cause the database service instance for a particular identity domain to use the schema that is mapped to that particular identity domain.

The multi-tenancy can also be extended to other services such as the Java Service. For example, multiple customers can have a JAVA service instance placed within their respective identity domains. Each such identity domain can have a JAVA virtual machine, which can be viewed as being a virtual "slice" of hardware. In one embodiment, a job-monitoring service (e.g., Hudson) can be combined with a JAVA enterprise edition platform (e.g., Oracle WebLogic) in the cloud to enable each separate identity domain to have its own separate virtual "splice" of the JAVA enterprise edition Platform. Such a job-monitoring service can, for example, monitor the execution of repeated jobs, such as building a software project or jobs run by an operating system's time-based job scheduler. Such repeated jobs can include the continuous building and/or testing of software projects. Additionally or alternatively, such repeated jobs can include the monitoring of executions of operating system-run jobs that are executed on machines that are remote from the machine on which the job-monitoring service executes.

As described above, upon receiving a subscription request from a customer for one or more services, cloud infrastructure system 100 provisions resources that are configured to provide the requested services. As part of the subscription request the customer may request for a certain number of resources. For example, the customer may request for a CRM service for 100 users, or request for a 5 GB of storage for a database service, and the like. Once resources for a requested service have been provisioned, in many instances the customer may overuse the resources in the service. For example, while the subscription order requests for a CRM service for 100 users, during usage of the CRM service, the customer may use the service to support 120 users, representing a 20 user over usage (referred to as overage).

In certain embodiments, as part of automating the provisioning, managing and tracking of services, cloud infrastructure system 100 tracks such overage. As another example, consider that a customer subscribes to a database service provided by cloud infrastructure system 100 at a service level that includes a "storage," resource usage limit of 5 GB and a "data transfer" resource usage limit of 1 GB. During usage of the service provided by cloud infrastructure system 100, the actual resources used by the customer may be 9 GB of storage and transfer 2 GB of data, resulting in over use of the service. In certain embodiments, cloud infrastructure system 100 computes and tracks the overage for each such resource used by the customer.

In certain embodiments, overage related processing is performed by TAS component 204 of cloud infrastructure system 100. In one embodiment, TAS component 204 provides an overage framework 322 that is configured to compute and track overage of one or more resources provisioned for one or more services in the customer's subscription order. In one embodiment, computing the overage for a resource includes computing a number of overage units for the resource, determining a price per unit of for the overage, and then computing the total overage cost for the resource.

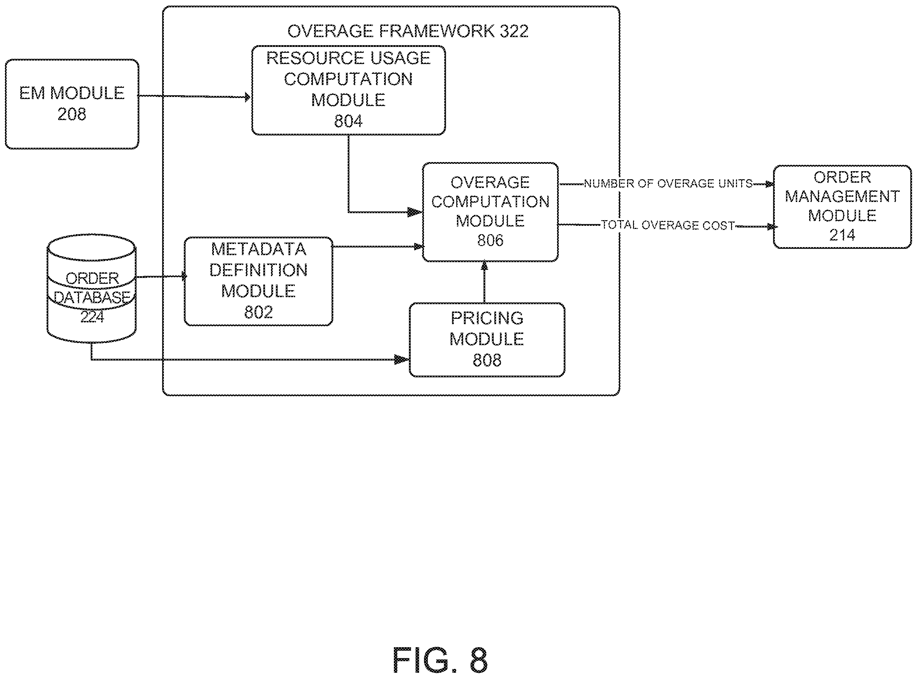

Fig. 8 is a high level block diagram illustrating an overage framework 322, which may be part of TAS component 204, in accordance with one embodiment of the present invention. In the embodiment depicted in Fig. 8, the overage framework 322 includes a metadata definition module 802, a resource usage computation module 804, an overage computation module 806 and a pricing module 808. Further, as depicted in Fig. 8, overage framework 322 may interact with EM module 208, order database 222, and order management module 214. These components may be implemented in hardware, or software, or combinations thereof. The components of overage framework 800 depicted in Fig. 8 are meant for illustrative purposes only and are not intended to limit the scope of embodiments of the present invention.

In certain embodiments, as previously described, EM module 208 is configured to collect resource usage statistics for various services provided by cloud infrastructure system 100. The usage statistics may be computed on a per service basis, on a per customer basis, on a per subscription order basis, and the like. The resource usage statistics collected by EM component 208 may include without limitation the amount of storage used, the amount data transferred, the number of users supported by a service, the number of applications deployed using a service (e.g., using the Java service), and so on. It is to be appreciated that the types of resources and associated usage statistics listed above are merely provided by way of example and are not intended to limit the scope of the present invention.

In certain embodiments, resource usage computation module 804 is configured to receive or access the resource usage statistics collected by EM component 208. Based upon the accessed information, resource usage computation module 804 is configured to determine the total resource usage on a per subscription basis. For a subscription, resource usage computation module 804 may determine the resources used by each service in the subscription order. In one embodiment, the resource usage computation module 804 determines the total resource usage of each resource for a service over a time interval that is specified by a collection start time and a collection end time.

Table -1 illustrates the total resource usage information determined by resource usage computation module 804 for a subscription order (identified by subscription ID "1") ordering a subscription for two services specified by a database service component and a Java service component. For example, for the database service component, usage information is determined for storage usage and the amount of data transfer performed. For the Java service component, the determined information comprises memory usage and the number of applications deployed using the Java service. For each resource for each service, the time period characterized by a start time and an end time over which the information was collected is also indicated. This time period is also referred to as the collection time period. The last column of Table-1 shows the "total Resource Usage" for each resource. The value in this column for a resource denotes the aggregate amount of the resource used over the collection time period.

Table-1

| Subscription ID | Services Component ID | Resource Name | Collection Start Time | Collection End Time | Total Resource Usage |
|---|---|---|---|---|---|
| 1 | DATABASE | STORAGE | 9 AM 01/22/2013 | 10 AM 01/221/2013 | 6 GB (this is the max storage used in this 1-hour period) |
| 1 | DATABASE | DATA TRANSFER | 9 AM 01/22/2013 | 9:30 AM 01/22/2013 | 0.1GB (this is the total data transferred in this half an hour) |
| 1 | JAVA | MEMORY | 9 AM 01/22/2013 | 10 AM 01/22/2013 | 0.5 GB (this is the average memory used in this 1 -hour period) |
| 1 | JAVA | DEPLOYED APPLICATIO NS | 1 PM 01/22/2013 | 4 PM 01/22/2013 | 5 (this is the max no of apps deployed in this 3-hour) period) |

The manner in which the "Total resource usage" is calculated for a resource based upon resource usage information collected for the resource over a collection time period is resource specific and may vary from one resource to another. Accordingly, the aggregate usage value calculated for a resource for a particular time period may be resource dependent. Table-2 shown below identifies some examples of resources and the manner in which the total resource usage is calculated for the resource.

Table-2

| Resoure Type | Aggregation Operator |
|---|---|
| Storage | MAX - The maximum amount of the storage resource used during the collection period. This is because the amount of storage used can vary over the collection time period. |
| Data Transfer | SUM (cumulative) - The total sum of the data transfers made during the collection period. Determined by adding together all of the data transferred over the collection period. |
| Memory | AVERAGE - The average amount of memory used during the collection period. |
| Deployed applications | MAX -- The maximum number of applications deployed during the collection period. This is because the number of deployed applications can vary over the collection period. |
| Others | Other aggregation operators. |

In certain embodiments, the total resource usage information determined by resource usage computation module 804 may then be used to determine whether overage of a resource has occurred. In the embodiment depicted in Fig. 8, computation of overage is performed by overage computation module 806. As part of the overage computation, overage computation module 806 may receive the resource usage information for a subscription order from resource usage computation module 804. The information received by overage computation module 806 for a subscription order may, for example, be as shown in Table-1.

In order to determine overage, overage computation module 806 also receives information related to the subscription order, which may be stored in order database 222. For example, as shown in Fig. 8, a metadata definition module 802 may be configured to extract metadata information for a subscription order and provide the information to overage computation module 806. Table -3 illustrates exemplary metadata information provided by metadata definition module 802 to overage computation module 806. In one embodiment, the metadata information listed in Table-3 includes various combinations of service levels, customer levels, resource types and resource usage limits that can be assigned to various service components in a subscription order.

Table-3

| Service Component | Service Level | Customer Level | Resource Type | Resource Usage Limit |
|---|---|---|---|---|
| DATABASE | BASIC | BASIC | STORAGE | 5 GB |

(continued)

| Service Component | Service Level | Customer Level | Resource Type | Resource Usage Limit |
|---|---|---|---|---|
| DATABASE | BASIC | SILVER | STORAGE | 10 GB |
| DATABASE | BASIC | GOLD | STORAGE | 15 GB |
| DATABASE | STANDARD | BASIC | STORAGE | 20 GB |
| DATABASE | ENTERPRISE | BASIC | STORAGE | 50 GB |
| DATABASE | BASIC | BASIC | DATA TRANSFER | 5 GB |
| DATABASE | STANDARD | BASIC | DATA TRANSFER | 20 GB |
| DATABASE | ENTERPRISE | BASIC | DATA TRANSFER | 50 GB |
| JAVA | BASIC | BASIC | MEMORY | 1 |
| JAVA | STANDARD | BASIC | MEMORY | 3 |
| JAVA | ENTERPRISE | BASIC | MEMORY | 6 |
| JAVA | BASIC | BASIC | DEPLOYED APPLICATIONS | 25 |

The service component relates to the type of service requested in the customer's subscription order. Examples include without limitation CRM service, Java service, database service, and the like. The service level specifies a level of a particular resource to be allocated to a service component. For example, in one implementation, the service levels may include a basic service level, a standard service level, and an enterprise service level. A basic service level may specify a minimum level of resources such as storage, data transfer, the number of users, memory or the number of deployed applications. The standard service level and the enterprise service level may specify additional or enhanced number of resources. In one embodiment, a particular service may specify different service levels for different resources allocated to the service. For example, as shown in Table-1, a database service may specify a "basic" service level for a ''storage," resource and an "enterprise" service level for a "data transfer" resource.

The customer level specifies the priority of the customer making the subscription request. In one example, the priority may be determined based on the quality of service that cloud infrastructure system 100 guarantees the customer as specified by the customer's Service Level Agreement (SLA). In one example, the different customer levels include a basic level, a silver level and a gold level. In one embodiment, a subscription order may specify different customer levels for a particular service and a particular resource type associated with the service. For example, a customer may have "BASIC" customer level for the database service and "SILVER" customer level for the Java service.

The resource type specifies the type of resource assigned to a service with a particular service level and a customer level. In the example shown in Table-3, the resource type assigned to a database service may include storage and data transfer while the resource type assigned to a java service may include memory and the number of deployed applications. Additionally, each service level and customer level for a service has associated resource usage limits. The resource usage limit refers to the amount of resources of a particular resource type that is assigned to a service level and customer level associated with a service. For example, as illustrated in Table -3, the resource usage limit for a storage resource assigned to a database service, at the "basic" service level and a "basic" customer level for a customer, is 5GB.

In certain embodiments, in order to determine overage, overage computation module 806 also receives one or more overage bands related to the services in a subscription order, from order database 222. The overage bands specify the amount of additional resources that can be utilized by a service at a particular service level and customer level over and above the resource usage limit assigned to the service level and the customer level associated with the service.

In certain embodiments, the overage band defines the size of an overage unit. In one example, the customer is charged one overage unit for each overage band. For example, suppose the overage band assigned to a storage resource for a database service is 2GB and the resource usage limit for the storage resource assigned to the database service is 5GB. If the customer utilizes 6 or 7 GB of the storage resource, the customer is charged one overage unit because both usages fall within the same overage band. However, if the customer utilizes 87B or the storage resource, the customer is charged 2 overage units, because this usage falls in the next overage band.

In one embodiment, metadata definition module 802 may be configured to extract information related to overage bands applicable to service components of a subscription order and provide this information to overage computation module 806. Table -4 illustrates exemplary overage bands provided by the metadata definition module 802 to overage computation module 806 for a customer's subscription order ordering a database service.

Table-4

| Service Component | Service Level | Customer Level | Resource Type | Overage Band |
|---|---|---|---|---|
| DATABASE | BASIC | BASIC | STORAGE | 2 GB |
| DATABASE | BASIC | SILVER | STORAGE | 4 GB |
| DATABASE | STANDARD | BASIC | STORAGE | 5 GB |
| DATABASE | ENTERPRISE | BASIC | STORAGE | 10 GB |
| | | | | |

As illustrated in Table-4, in one embodiment, multiple overage bands may be defined above the resource usage limit specified for a storage resource for the database service. The bands depicted in Table-4 are all for the database service and for a storage resource type. For example, for a "basic" service level and a "basic" customer level, a first overage band may be defined for a storage resource for amounts up to 2 GB above the resource usage limit of 5GB (obtained from Table-3). For a "basic" service level and a "silver" customer level, a second overage band may be defined for a storage resource for amounts up to 4 GB over the resource usage limit of 5GB. For a "standard" service level and a "basic" customer level, an overage band may be defined for a storage resource for amounts up to 5 GB over the usage limit of 5GB. For an "enterprise" service level and a "basic" customer level, an overage band may be defined for up to 10 GB over the usage limit of 5GB. It is to be appreciated that the metadata information listed in Table-3 and Table-4 is merely provided by way of example and is not intended to limit the scope of the present invention. One of ordinary skill in the art would recognize many variations, modifications, and alternatives.

Overage computation module 806 utilizes the total resource usage information received from resource usage computation module 804 and the metadata information received from metadata definition module 802 to compute the overage of one or more resources used by the customer. In one embodiment, overage computation module 806 computes the overage by computing the number of overage units for each resource and the total overage cost for each resource. In one embodiment, the number of overage units for one or more resources utilized by a customer during usage of one or more services in a subscription order is computed by comparing the total resource usage (e.g., from Table-1) with the resource usage limit (e.g., from Table-2) and the overage band (e.g., from Table-4) of the resource for a specific service level and customer level associated with the service as fellows.

If the total resource usage is determined to be within the resource usage limit for the resource, then no overage amount is determined to have occurred for the resource. If the total resource usage has crossed the resource usage limit, then the time interval during which the overage occurred is identified (e.g., from Table -1). The number of overage units for the resource, for a given service level and customer level, during the time interval is then determined as shown in equation (1) below:

$$\text{Number of overage units} = \text{ceiling of } [(\text{total resource usage} - \text{usage limit})/\text{overage band}] \quad (1)$$

The total overage cost is then computed as shown in equation (2) below:

$$\text{Total overage cost} = \text{number of overage units} * \text{price per overage unit} \quad (2)$$

In one embodiment, overage computation module 806 interacts with pricing module 808 to determine the price per overage unit for the resource, for a specific service level and customer level associated with the resource. In one embodiment, pricing modules 808 may obtain information related to the price per overage unit for an overage period for various resources utilized by the customer from order database 222. Table-5 illustrates exemplary overage unit prices provided by order database 222 to pricing module 806 for a subscription order ordering a database service and ajava service.

Table -5

| Service Component | Service Level | Customer Level | Resource Type | Price per overage unit per overage period |
|---|---|---|---|---|
| DATABASE | BASIC | BASIC | STORAGE | $100 |
| JAVA | BASIS | BASIC | MEMORY | $200 |

In one example, the price per overage unit for a resource may be computed as a fixed charge for each additional GB stored or transferred over and above the amount of the resource utilized by the customer. In another example, the price per overage unit may be determined based on the overage bands. For example, based on the overage bands, the price per overage unit for a resource with an overage that falls within a (2GB-4GB) range may be the same, whereas a higher price per overage unit may be determined for each additional GB stored or transferred over and above 4GB.

In certain embodiments, pricing module 808 may also determine the total overage cost for a resource for different overage periods in a billing cycle. In one embodiment, the overage period is computed based on the time interval (e.g., from Table-1) during which the overage for the resource occurred. As an example, if the overage period is one month and the billing cycle is performed quarterly, pricing module 808 determines the total overage cost for the resource for each of the three overage periods in the billing cycle. The total overage cost for the billing period is sum of the total overage cost for all overage periods in the billing cycle. The overage period duration can be varied to support overage computation at finer or coarser levels of granularity. It is to be appreciated that determining multiple overage periods for a billing cycle takes into consideration the fact that the service levels and customer levels for a subscription can vary over the billing cycle. For example, the customer may have upgraded to a higher service level in the middle of the billing cycle. If the upgraded service level is used for the entire billing cycle, the customer may be undercharged for overage that occurred before the upgrade.

As an example, consider a "storage" resource assigned to a database service in a customer's subscription order. For purposes of this example, consider that the total resource usage during a time interval, 9 AM, 01/22/2013 - 10AM, 01/22/2013 is determined to be 6 GB (for e.g., determined from Stable-1), the resource usage limit at the "basic" service level and customer level is determined to be 5GB (for e.g., determined from Table-3) and the overage band for the resource at the "basic" service level and customer level is determined to be 2 GB (for e.g., determined from Table-4). Overage computation module 806 computes the number of overage units for the "storage," resource at the "basic" service level and customer level, during the time interval as shown in equation (3) below.

$$\text{Number of overage units} = \text{ceiling of } [(6-5)/2] = \text{ceiling of } [0.5] = 1 \text{ overage unit} \qquad (3)$$

In addition, consider that the price per overage unit for the "storage" resource at the "basic" service level and customer level during the time interval is determined to be $100, by pricing module 808. Overage computation module 806 computes the total overage cost for the "storage" resource at the "basic" service level and customer level as shown in equation (4) below.

$$\text{Total overage cost} = 1 * 100 = \$100 \qquad (4)$$

In certain embodiments, the overage computation module 806 provides the number of overage units and the total overage cost to order management module 214. Order management module 214 may then utilize the services of services component 202 (shown in Fig. 2) to send a notification to the customer regarding the overage of the resources assigned to one or more services in the customer's subscription order. In one embodiment, the notification includes the number of overage units and the total overage cost of each of the resources assigned to each of the services.

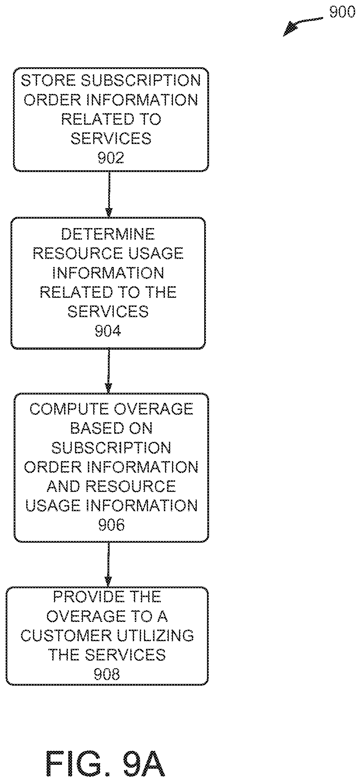

Fig. 9A depicts a simplified flowchart 900 depicting processing that may be performed by the overage framework for computing the overage of one or more resources assigned to one or more services in a customer's subscription order in cloud infrastructure system 100. In one embodiment, the processing of Fig. 9A may be performed by the modules 802, 804, 806 and 808 in overage framework 322 shown in Fig. 8 respectively. The processing 900 depicted in Fig. 9A may be implemented in software (e.g., code, instructions, program) executed by one or more processors, hardware, or combinations thereof. The software may be stored in memory (e.g., on a memory device, on a non-transitory computer-readable storage medium). The particular series of processing steps depicted in Fig. 9A is not intended to be limiting. Other sequences of steps may also be performed according to alternative embodiments. For example, alternative embodiments of the present invention may perform the steps outlined above in a different order. Moreover, the individual steps illustrated in Fig. 9A may include multiple sub-steps that may be performed in various sequences as appropriate to the individual step. Furthermore, additional steps may be added or removed depending on the particular applications.

One of ordinary skill in the art would recognize many variations, modifications, and alternatives.

At 902, subscription order information related to one or more services subscribed to a customer of cloud infrastructure system 100 is stored. In one embodiment, the subscription order information is stored in order database 222. Exemplary metadata information related to one or more services subscribed to by a customer is shown in Tables 3 and 4.

At 904, resource usage information for one or more resources associated with the services identified in the subscription order is determined. In one embodiment, the resource usage information is determined based on collecting resource usage statistics related to one or more resources associated with the one or more services. In one embodiment, and as discussed in Fig. 8, resource usage computation module 804 determines the total resource usage of each resource assigned to the services by aggregating the resource usage statistics associated with the resources over a time interval. In certain embodiments, the time interval is an overage period, wherein for each overage period there may be several rows in Table -1 for a resource used by a service of a subscription. Accordingly, at 904 these rows are aggregated using the appropriate aggregation operator defined for the resource in Table 2. For example, for a storage resource, the maximum usage value in these rows is chosen, while for a data transfer resource, the usage values are summed over all applicable rows.

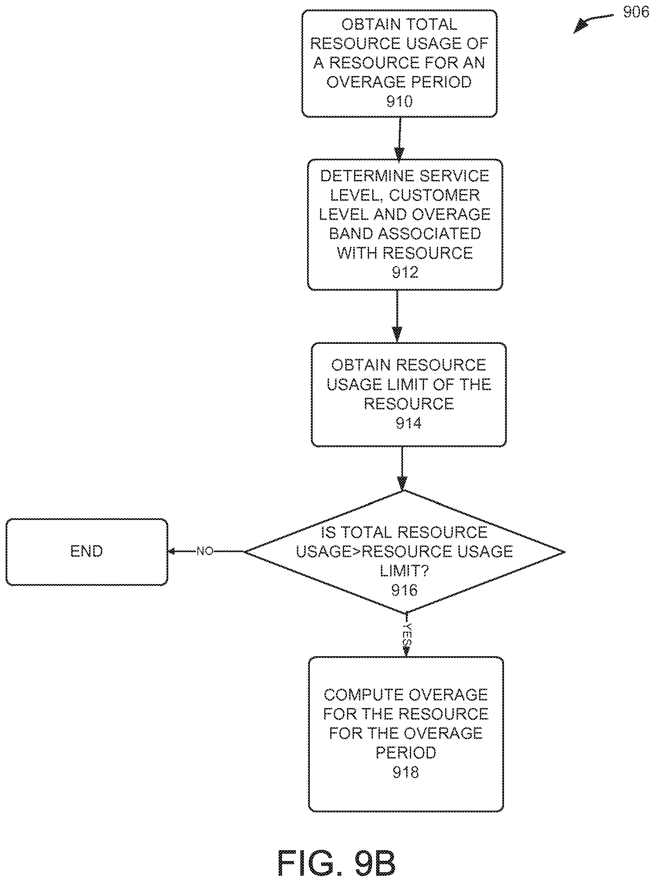

At 906, an overage of one or more resources assigned to the services is computed based on the resource usage information and the subscription order information. Additional description related to computing the overage is discussed in detail in Fig. 9B.

At 908, the overage of the resources is provided to a customer utilizing the services in the cloud infrastructure system 100. In one embodiment, a notification is sent to the customer regarding the overage ot the resources assigned to the services in the customer's subscription order. In one embodiment, the notification includes the number of overage units and the total overage cost for each of the resources assigned to each of the services in the customer's subscription order.

Fig. 9B depicts a simplified flowchart depicting processing that may be performed to compute the overage of one or more resources in accordance with an embodiment of the invention. In one embodiment, the processing depicted in Fig. 9B includes additional details of performing step 906 shown in Fig. 9A. In one embodiment, the processing depicted in Fig. 9B discusses a process for computing the overage of a single resource assigned to a service in the customer's subscription order for an overage period. It is however to be appreciated that the particular series of processing steps depicted in Fig. 9A is not intended to be limiting to a single resource and may be applied to one or more resources for one or more services requested in a customer's subscription order.

At 910, the total resource usage for a service is obtained for the overage period. In one embodiment, the overage period is computed based on the time interval (e.g., from Table-1) during which the overage for the resource occurred. In one embodiment, the total resource usage s obtained by applying the appropriate aggregation operator for the resource recorded in Table-2 to the resource usage rows recorded in Table -1 that falls within the overage period.

At 912, the service level, the customer level and the overage band information associated with the resource for the determined service and customer level for the overage period is obtained. In one embodiment, the service level, the customer level and the overage band of the resource is obtained from the metadata information stored in Table-2 and Table-3.

At 914, the resource usage limit of the resource for the particular service and customer levels, for the overage period is obtained (e.g., from Table-3).

At 916, it is determined if the total resource usage of the resource has exceeded the resource usage limit for the resource. If it is determined that the total resource usage has not exceeded the resource usage limit, then it is determined that no overage is computed and the processing ends for this resource.

At 918, the overage for the resource for the specific service level and customer level is computed, during the overage period. Computing the overage may include computing the number of overage units of the resource. In one embodiment, the number of overage units is computed as shown in equation (1) in Fig. 8 as: Number of overage units = (overall usage --- usage limit)/overage band. In another embodiment, computing the overage includes computing the total overage cost of the resource. In one embodiment, the total overage cost is computed as shown in equation (2) in Fig. 8 as: Total overage cost = number of overage units * overage unit price.

When a subscription order from a customer is received, cloud infrastructure system 100 has to perform several processing steps before the services requested by the order are usable by the customer. For example, these processing steps may involve verifying the order that may in turn require getting additional information from the customer, provisioning resources for providing one or more requested services, creating identity domains to ensure security for the customer data, and the like. Many of these processing steps may take some time to be performed. However, the customer typically wants to start using the ordered services as soon as possible. In certain embodiments, techniques for automating the provisioning, managing and tracking of services provided by cloud infrastructure system 100 include providing the customer with the ability to gain access to services requested in the subscription order upon placing the subscription order and without the customer having to wait until all the steps involved in processing the subscription order are complete.

In one embodiment, the overall steps that are performed after a subscription order is received are categorized into two categories:

(1) "primary steps" that include the minimal one or more steps that need to be performed before the ordered services can be provided and made available for the customer; and

(2) "secondary steps" that include steps that are performed in response to receiving a subscription order but which are not essential for making the services available to the customer initially. Accordingly, from the overall steps that are performed in response to a subscription order, any step that is not categorized as a primary step is categorized as a secondary step. A primary step is not dependent upon a secondary step.

In certain embodiments, a primary order workflow is defined for a subscription order that only comprises the primary steps. One or more secondary order workflows may be defined that comprises the secondary steps. Upon receiving a subscription order, a set of one or more workflows related to processing to be performed for the order are identified. The set of workflows includes a primary order workflow and one or more secondary order workflows related to processing to be performed for the subscription order. In one embodiment, upon execution of the primary steps in the primary order workflow, the customer is provided access to the services requested in the subscription order. The customer does not have to wait until processing of all the secondary steps are completed before the customer can access the ordered services. The secondary steps may be executed concurrently with the primary steps, where possible, or may be executed after the primary steps have been executed, to complete processing of the subscription order.

In certain embodiments, the primary steps for a subscription order depend upon the contents of the subscription order. For example, the primary steps for an order may depend upon the services that are ordered or even the level of service ordered.

In a typical example, the primary steps involved in processing a subscription order may include at least provisioning the allocation of the physical resources and creating an identity domain, if necessary, along with customer identities so that the customers can gain access to the service. Other back office functions related to the subscription order such as accounting and support that are not necessary for a customer to start using the service may be completed after the customer gains access to the service and are categorized as secondary steps. For example, some of the processing performed by order management module 214 such as creating a customer record and performing accounting functions related to the subscription order may be categorized as secondary steps. In one embodiment, the secondary step of creating customer records may be performed by order management module 214 concurrently with the primary step of provisioning resources for the subscription that is performed by SDI module 206.

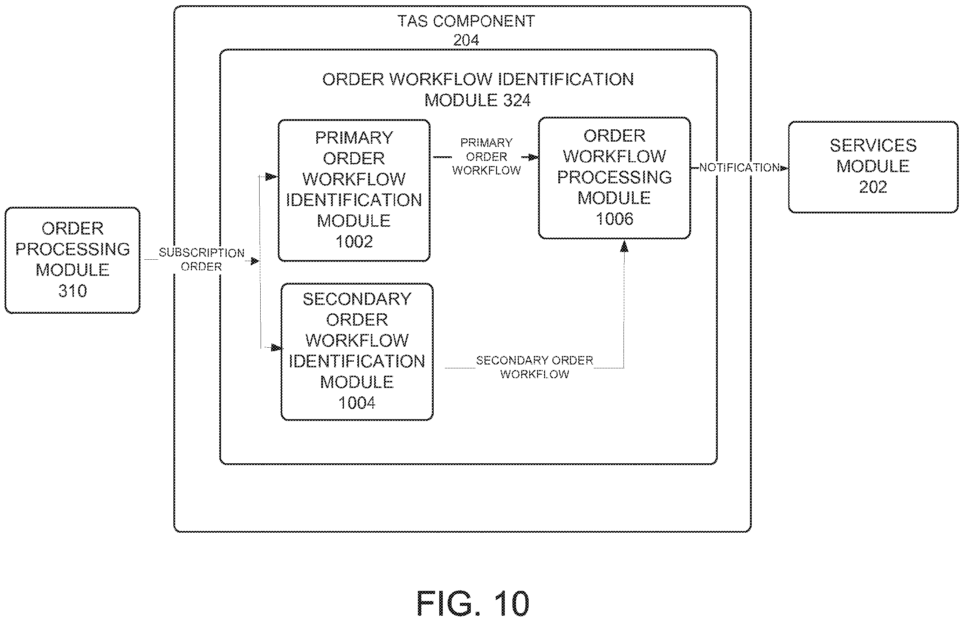

Fig. 10 is a high level block diagram of a system for processing a customer's subscription order, in accordance witch one embodiment of the invention. The embodiment depicted in Fig. 10 comprises an order workflow identification module 324, which is part of TAS module 204. As illustrated in Fig. 10, in one embodiment, order workflow identification module 322 includes a primary order workflow identification module 1002, a secondary order workflow identification module 1004 and an order workflow processing module 1006. These modules may be implemented in hardware, or software, or combinations thereof. The modules in order workflow identification module 322 depicted in Fig. 10 are meant for illustrative purposes only and are not intended to limit the scope of embodiments of the present invention. For example, alternative embodiments of the present invention may include additional modules in order workflow identification module 324.

Upon receiving a customer's subscription order from order processing module 310 as discussed in Fig. 3B, in one embodiment, primary order workflow identification module 1002 analyzes the subscription order to identify a primary order workflow related to the customer's subscription order. The primary order workflow includes one or more primary steps related to processing the subscription order. For example, primary order workflow identification module 1002 may identify a primary order flowchart comprising steps P1-P8 discussed below:

P1: Receiving a customer's subscription order via store UI 210 or cloud UI 212.

P2: Creating a customer record associated with the subscription order.

P3: Creating a logical subscription footprint of the customer's subscription. order. In one example, the logical subscription footprint may include creating a set of records associated with the customer's subscription order such as the customer record, a customer account information record, a service configuration record and so on.

P4: Creating an identity domain administrator or a system administrator associated with the customer's subscription.

P5: Creating an account administrator associated with the customer's subscription.

P6: Creating a physical subscription footprint associated with the customer's subscription. This involves allocating a minimum set of resources requested by the customer so that the customer can gain access to the services in the subscription order.

P7: Enabling monitoring of the physical subscription footprint.

P8: Sending a notification to the customer that the customer can start accessing the services in the subscription order.

It is to be appreciated that the example of primary steps described above is not intended to be limiting. Primary order workflow identification module 1002 then inputs the primary order workflow to order workflow processing module 1006 for execution. Order workflow processing module 1006 then causes the primary order workflow to be executed. The primary order workflow can be executed independent of the secondary order workflow.

Executing the primary order workflow may possibly involve additional components of cloud infrastructure system 100. For example, for the example provided above, primary step P1 may be executed via the front-end interfaces, store UI 210 or cloud UI 212, primary steps P2 and P3 may be executed by order management module 214, primary steps P4 and P5 may be executed by TAS module 204, primary step P6 may be executed by TAS module 204 and SDI module 206, primary step P7 may be executed by EM module 208 and primary step P8 may be executed by services module 202. Upon execution of the steps in the primary order workflow, the order workflow processing module 1006 notifies service component 202 that the customer can start utilizing the services in the subscription order. In one embodiment, a URL that can be used by the customer to access the ordered services may be provided to the customer as part of the notification.

Secondary order workflow identification module 1004 is configured to analyze the subscription order and identify one or more secondary order workflows related to the subscription order. Each secondary order workflow may include one or more secondary steps related to processing the subscription order. For example, in one embodiment, secondary order workflow identification module 1004 may identify a secondary order workflow comprising steps, S1-S12 discussed below:

S 1: Creating the customer's billing schedule in order management module 214.

S2: Creating the customer's contract information in the contract management module in order management module 214.

S3: Creating the entitlement footprint in the install base module of order management module 214. As used herein, the entitlement footprint includes information about the amount of resources that a customer is entitled to. The entitlement data may be determined based on customer information and a set of centralized access control policies. In one embodiment, the resources that a customer is entitled to may be automatically provisioned to the customer when the customer places a subscription order without the involvement of a service administrator.

S4: Creating the customer's invoice in order management module 214.

S5: Sending the entitlement footprint to the support system.

S6: Sending subscription information (including buyer, identity domain administrator and service administrator information) to the support system.

S7: Creating a subscription record in the support system.

S8: Enabling the buyer to access the support system via support UI 216.

S9: Enabling the identity domain administrator to access the support system via support UI 216.

S10: Enabling the service administrator to access the support system via support UI 216.

S11: Processing additional physical subscription footprint configuration steps that include, for example, additional index creation, additional virtual machine allocation, additional language pack installation, additional sample data creation etc.

S12: Creating a non-admin user.

It is to be appreciated that the secondary steps S1-S12 listed above are merely examples of secondary steps and are not intended to limit the scope of the present invention. Secondary order workflow identification module 1004 is configured to input the one or more secondary order workflows to order workflow processing module 1006, which may then cause the secondary workflows to be executed. Executing the secondary order workflows may possibly involve additional components of cloud infrastructure system 100.

As previously described, the execution of the primary order workflow is not dependent upon the execution of one or more secondary order workflows. In some situations, one or more secondary steps of the secondary order workflows may be executed after the primary order workflow execution has completed. In some other situations, one or more secondary steps in the secondary order workflows may be executed in parallel or concurrently with some of the primary steps in the primary order workflow. For example, order management module 214 may perform the secondary step of creating the customer's subscription records concurrently with SDI module 206 performing the primary step of creating provisioning resources for the subscription. Further, the secondary order workflows may be executed in series, or where possible, one or more may be executed in parallel. Accordingly, where possible, two of more secondary steps may be performed concurrently.

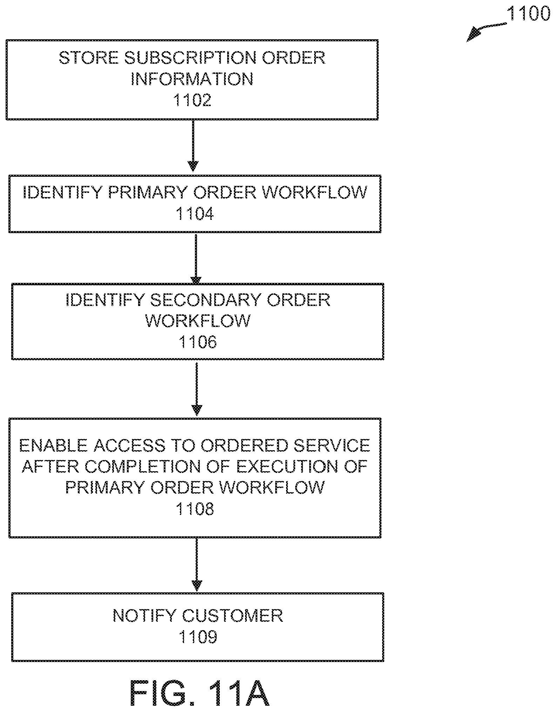

Fig. 11A depicts a simplified flowchart depicting processing that may be performed by order workflow identification module 324 in TAS module 206 to process a subscription order using primary and secondary order workflows, in accordance with an embodiment of the present invention. The processing 1100 depicted in Fig. 11A may be implemented in software (e.g., code, instructions, program) executed by one or more processors, hardware, or combinations thereof. The software may be stored in memory (e.g., on a memory device, on a non-transitory computer-readable storage medium). The particular series of processing steps depicted in Fig. 11A is not intended to be limiting. Other sequences of steps may also be performed according to alternative embodiments. For example, alternative embodiments of the present invention may perform the steps outlined above in a different order. Moreover, the individual steps illustrated in Fig. 11A may include multiple sub-steps that may be performed in various sequences as appropriate to the individual step. Furthermore, additional steps may be added or removed depending on the particular applications. One of ordinary skill in the art would recognize many variations, modifications, and alternatives. In one embodiment, the processing depicted in Fig. 11A may be performed by one or more modules in order workflow identification module 324 discussed in detail in Fig. 10.

At 1102, subscription order information related to a subscription order ordering a service from a set of services provided by cloud infrastructure system 100 is stored. In one embodiment, order database 222 stores the subscription order information. Subscription order information may include information about the order such as a service type, a service level, a customer level, the type of resources, the amount of the resources to be assigned to the service type and a time period during which the service is desired , as depicted in Table-6.

Table-6

| Service Component | Service Level | Customer Level | Resource Type | Amount of Resources Assigned | Time Period |
|---|---|---|---|---|---|
| DATABASE | BASIC | BASIC | STORAGE | 2 GB | First Time Period |
| DATABASE | BASIC | SILVER | STORAGE | 4 GB | Second Time Period |
| DATABASE | STANDARD | BASIC | STORAGE | 5 GB | Third Time Period |
| DATABASE | ENTERPRISE | BASIC | STORAGE | 10 GB | Fourth Time Period |

At 1104, a primary order workflow for processing the subscription order is identified based on the subscription order information. The primary order workflow includes one or more steps to be performed prior to enabling use of the ordered services in the subscription order. In one embodiment, and as discussed in Fig. 10, the primary order workflow includes one or more primary steps related to processing the subscription order, which may include for example, creating a logical subscription footprint, a physical subscription footprint and an account administrator related to the subscription order.

At 1106, a secondary order workflow for processing the subscription order is identified based on the subscription order information. The secondary order workflow includes one or more steps to be performed for completing processing the subscription order. In one embodiment, and as discussed in Fig. 10, the secondary order workflow includes one or more secondary steps related to processing the subscription order, which may include for example creating an entitlement footprint and accounting records for the customer and configuring additional resources for the customer based on the physical subscription footprint related to the subscription order.

At 1108, access to the ordered services in the subscription order is enabled after completion of execution of the primary order workflow. In one embodiment, access to the ordered services is enabled before completion of execution of one or more steps in the secondary order workflow. Accordingly, a customer is able to start using the ordered services even though one or more of the secondary steps needed to complete processing the subscription order have all not been completed. In one embodiment, one or more of the steps in the secondary order workflow may be executed concurrently with one or more of the steps in the primary order workflow to complete the processing of the subscription order. In another embodiment, one or more of the steps in the secondary order workflow may be executed after one or more of the steps in the primary order workflow to complete the processing of the subscription order.

At 1109, upon completion of execution of the steps in the primary order workflow, the customer is notified so that the customer can start utilizing the ordered services in the subscription order.

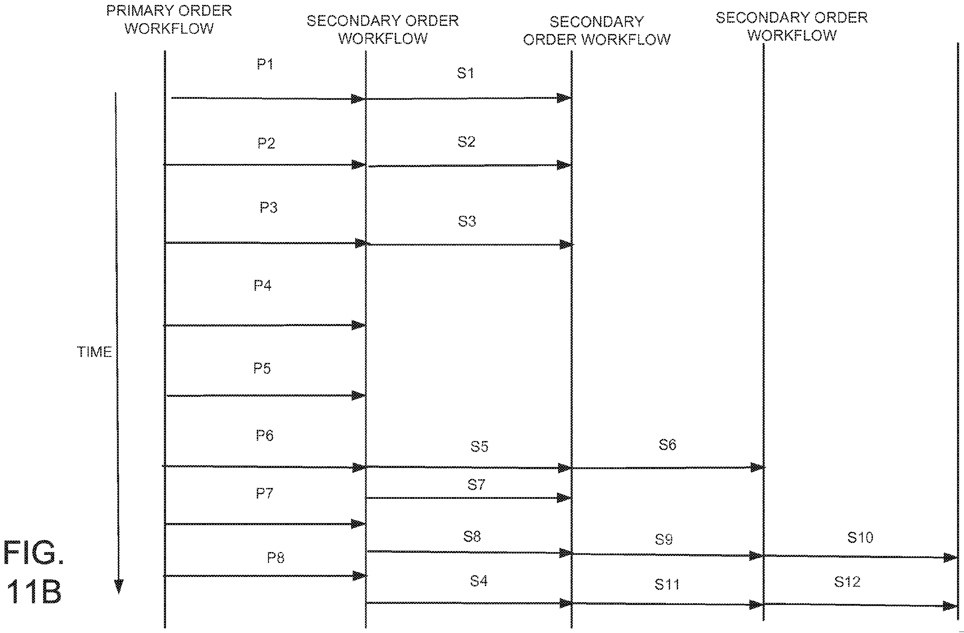

Fig. 11B discusses an example of how one or more secondary steps in a secondary order workflow may be executed in relationship with one or more primary steps in a primary order workflow to process a customer's subscription order according to an embodiment of the present invention. Referring to Fig. 11B, in one embodiment, the primary order workflow comprises primary steps P1-P8 (corresponding to the primary order workflow example described above) that are executed in order as each one has a dependency on the preceding primary step. The secondary order workflow comprises secondary steps S1-S12 (corresponding to the secondary order workflow example described above).

As can be seen from Fig. 11B, in one embodiment, secondary steps S1, S2 and S3 of creating the customer's billing schedule, creating contract information and creating entitlement footprint information may be executed in order as each one has a dependency on the preceding secondary step. In one example, and as shown in Fig. 11B, secondary step S1 may execute in parallel with primary step P1 followed by the execution of secondary steps S2 and S3.

In certain embodiments, the execution of primary steps P1-P5 need to be complete before the secondary step S6 of sending the subscription information to the support system can be executed. However, the secondary step S6 can be executed in parallel with either primary step P6, P7 or P8 of creating a physical subscription footprint, monitoring the physical subscription footprint, and sending a notification to the customer, respectively. In addition, secondary steps S5 and S6 of sending the entitlement footprint and the subscription information can be executed in parallel.

In one embodiment, secondary steps S5, S6, S7 are completed before the secondary steps S8, S9, S10 of enabling the buyer, identity domain administrator and service administrator to access the support system, can be executed. However, the secondary steps S8, S9, S10 can be executed in parallel.

In one embodiment, the customer does not get billed before the customer accesses the subscription. So, the invoice creation step (S4) has a dependency on the physical subscription creation step (P6). In addition, the primary step P8 of notifying the customer about completion of the processing of the subscription order is completed before the secondary step S4 of creating an invoice can be executed. However, the secondary step S4 can be executed before or concurrently with the secondary steps S11 and S12 of secondary physical configuration and non-admin user creation, respectively. In one embodiment, the primary order workflow and the secondary order workflow may be modeled as a directed graph in which the nodes of the graph represent the primary steps and the secondary steps and the edges of the graph represent the dependencies between these steps. In one implementation, all the ancestor nodes of any primary step node are primary step nodes because all the ancestor steps are completed before a descendant step can be completed. On the other hand, the descendant nodes of a primary step node can be either primary or secondary step nodes.

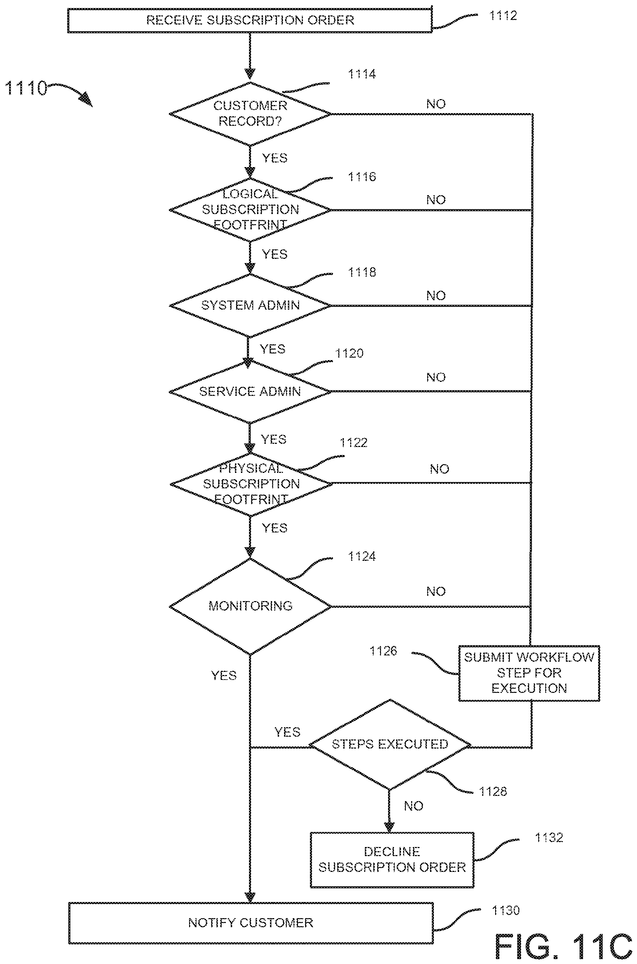

Fig. 11C is a high level flowchart 1110 illustrating a method for executing steps for processing a subscription order using a primary order workflow in accordance with one embodiment of the present invention. Referring to Fig. 11A, the method 1110 includes receiving a customer's subscription order (1112). A series of determinations are then made: has a customer record for the subscription order been generated (1114), has the logical subscription footprint for the subscription order been generated (1116), has a system administrator for the subscription order been created (1118), has a service administrator for the subscription order been created (1120), has the physical subscription footprint for the subscription order been generated (1122) and has the monitoring for the subscription order been enabled (1124). If any of the conditions in any of the steps 1114-1124 are not met, then the particular step associated with providing the customer access to subscription order is submitted for execution to one or more components in cloud infrastructure system 100 (1126). Once all the primary steps have been executed (1128), then the customer's access to the subscription order is provided and the customer is notified (1130). If any of the conditions in any of the steps 1114-1124 are not met, then the customer's access to the subscription order is declined (1132).

It should be appreciated that the specific steps illustrated in Fig. 11C provide a particular method of processing a primary order workflow associated with a customer's subscription order according to an embodiment of the present invention. Other sequences of steps may also be performed between steps 1112 and 1132 in other embodiments. For example, alternative embodiments of the present invention may perform the steps outlined in Fig. 11C in a different order. Moreover, the individual steps illustrated in Fig. 11C may include multiple sub-steps that may be performed in various sequences as appropriate to the individual step. One of ordinary skill in the art would recognize many variations, modifications, and alternatives.

In certain situations, processing a customer's subscription order in cloud infrastructure system 100 may involve the storage of sensitive information related to the customer's subscription order by one or more components in the cloud infrastructure system. For example, sensitive information stored by the components in cloud infrastructure system 100 may include confidential customer information such as customer's identities, credit card information, contract details, information related to a customer's access to resources provisioned to one or more services in the customer's subscription order and so on. In one embodiment, cloud infrastructure system provides a framework for handling the secure interaction between these components that wish to transfer information between each other during processing of a customer's subscription order. In one embodiment, the components are assigned to various security zones. The assignment of a component to a security zone may be based upon the sensitivity of the data handled by the components, the sensitivity of functions performed by the component, and the like.

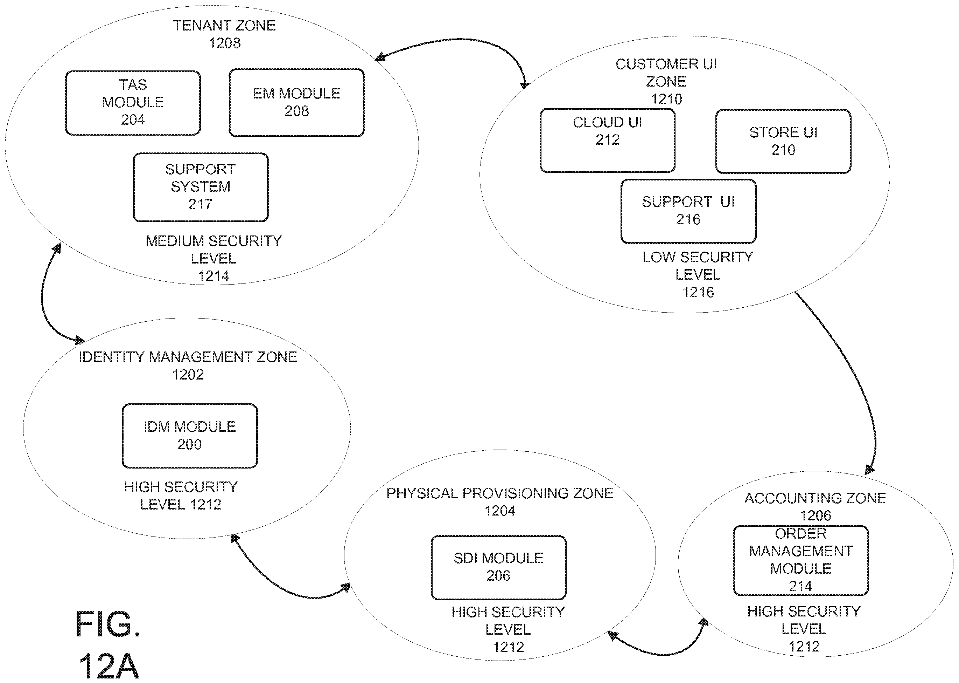

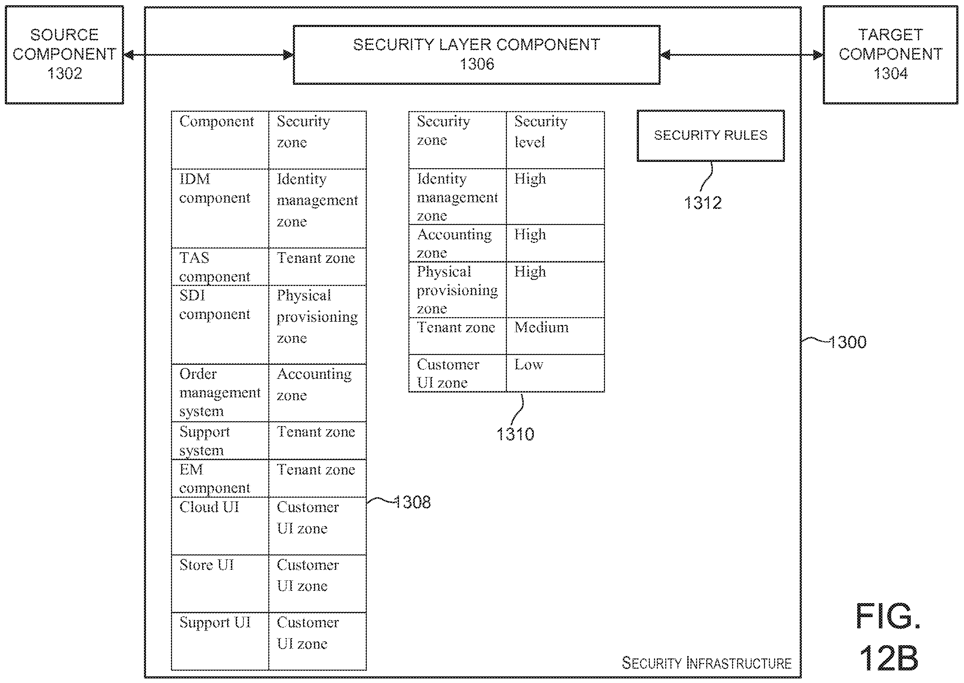

Fig. 12A is a logical view of the assignment of security zones to various components in the cloud infrastructure system in accordance with one embodiment of the present invention. As depicted in Fig. 12, various security zones may be assigned to one or more components of cloud infrastructure system 100 such as an identity management zone 1202, a physical provisioning zone 1204, an accounting zone 1206, a tenant zone 1208 and a customer UI zone 1210. In addition, a security level may be associated with each security zone. In one embodiment, the security levels are selected from a high security level 1212, a medium security level 1214, and a low security level 1216.

In one embodiment, the assignment of a component to a security zone and a security level may be based upon the sensitivity of the data handled by the components, the sensitivity of functions performed by the component, and the like. There may be multiple zones with the same level of security. As an example, one or more components in order management module 214 that perform back office functions such as billing and maintaining confidential customer information may be assigned to a security zone with a high security level. Similarly, components in IDM module 200 that maintain identity information within the data centers of cloud infrastructure system 100 and components in SDI module 206 that provision and control a customer's access to resources in cloud infrastructure system 100 may be assigned to a security zone with a high security level. Components that orchestrate the provisioning of resources in cloud infrastructure system 100 and enable monitoring of services in the customer's subscription order in TAS module 204 and EM module 208 may be assigned to a security zone with a medium security level. Components that provide a user interface to customers in cloud UI 212, store UI 210 and support UI 216 may be assigned to a security zone with a low security level.

The assignment of a component to a security zone with an associated security level may also be performed based on the distance of a component from the end user or customer. In one example, the closer a component is to the end user, the lower is the security level of the security zone of the component. For example, the user interface related components in cloud UI 212, store UI 210, and support UI 216, which are directly accessible by a user, are assigned to customer UI zone 1210 associated with a low security level. On the other hand, back-office processing components in order management module 214 are assigned to accounting zone 1206 associated with a high security level 1212.

In the example depicted in Fig. 12A a component in SDI module 206 is assigned to physical provisioning zone 1204 associated with high security level 1212. A component in IDM module 200 is assigned to identity management zone 1202 associated with a high security level 1212. A component in order management module 214 is assigned to accounting zone 1206 associated with a high security level 1212. Components in TAS module 204, EM module 208, and support system 217 are assigned to tenant zone 1208 associated with a medium security level 1214. Components in cloud UI 212, store UI 210, and support UI 216 are assigned to customer UI zone 1210 associated with a low security level 1216. In one embodiment, the assignment of a component to a particular security zone and particular security level may be performed by an administrator of cloud infrastructure system 100. In certain embodiments, information may be stored by cloud infrastructure system 100 mapping each component to its associated security zone and security level.

It is to be appreciated that the security zones and security levels discussed above are not intended to limit the scope of the present invention but are merely discussed to provide an example. Additional exemplary security zones and security levels may be defined for components of cloud infrastructure system 100, in other embodiments. A particular zone may comprise zero or more components. One of ordinary skill in the art would recognize many variations, modifications, and alternatives.

In certain embodiments of the present invention, the ability of two components to interact with each other, including the ability of the two components to exchange data with one another is determined based on the security zones to which the components are assigned and the security levels associated with the zones. The security zones and their associated security levels thus control the transfer of information between components in cloud infrastructure system 100. A security zone-based security infrastructure 900 is defined that facilitates the interaction between one or more components in cloud infrastructure system 100 in a secure manner.

In one embodiment, security zone-based security infrastructure 900 defines a set of one or more rules for facilitating the interaction between one or more components that wish to transfer information between each other, based on the security zones and the security levels.

Fig. 12B illustrates a security zone-based security infrastructure 1300 according to an embodiment of the present invention. In one embodiment, security infrastructure system 1300 is used to control interactions between one or more components in cloud infrastructure system 100. As illustrated in Fig. 12B, in one embodiment, security infrastructure system 1300 includes a security layer component 1306, and information that is used by security layer component 1306. In one embodiment, the information used by security layer component 1306 comprises component to security zone mapping information 1308, security zone to security level mapping information 1310, and rules information 1312. Information 1308, 1310, and 1312 may be stored in various forms. For example, in one embodiment, component to security zone information 1308 may be stored as a table with one column of the table identifying the components and a second column of the table identifying a security zone to which each component is assigned. Likewise, in one embodiment, security zone to security level information 1310 may be stored as a table with one column of the table identifying security zones and a second column of the table identifying a security level for each security zone.

In one embodiment, security layer component 1306 may be provided as a separate component in cloud infrastructure system 100. In such an embodiment, an interaction request from source component 1302 to target component 1304 may be intercepted by security layer component 1306. Security layer component 1306 may then process the request and based upon the results of the processing, enable the transfer of information between the source component and the target component.

In another embodiment, security layer component 1306 may be part of each component in cloud infrastructure system 100. In such an embodiment, an interaction request originating from a source component 1302 may be passed to security layer component 1306 within the components. The security layer component within the components may then process the request and based upon the results of the processing, enable the transfer of information between the source component and the target component.

The security-related processing performed by security layer component 1306 may be explained using the following example. Consider a situation where source component 1302 wishes to transfer information to the target component 1304 while processing a customer's subscription order in cloud infrastructure system 100. Source component 1302 may originate a request to transfer information to target component 1304. Security layer component 1306 is configured to receive or intercept this request. From the request, security layer component 1306 determines the identities of the source component and the target component. Using component to security zone information 1308, security layer component 1306 determines a security zone (referred to as the source security zone) to which source component 1302 belongs to and a security zone (referred to as the target security zone) to which target component 1304 belongs to. Security layer component 1306 then uses security zone to security level mapping information 1310 to determine a security level (referred to as source security level) for the source security zone and a security level (referred to as target security level) for the target security zone.

Once the source security level and target security level have been identified, security layer component 1306 consults security rules information 1312 to control interactions between the source component and the target component. In certain embodiments, security rules information 1312 may specify various rules that govern the transfer of information between the source component and the target component. In one embodiment, and as will be discussed in detail below, the rules specify when information is permitted to be pushed from one security level to another and when information is permitted to be pulled by one security level from another security level. Accordingly, rules may be specified based on a push-pull communication model for one or more components within cloud infrastructure system 100. The push-pull rules are intended to protect the transfer of information from a less secure zone to a more secure zone. A component in a higher security zone pushes information to a component in a lower security zone and pulls information from a component in a lower security zone. A component in a lower security zone may not have direct read or write access to the data managed by a component in a higher security zone. Components within the same security zone may have read or write access with respect to each other.

In one embodiment, the set of rules that govern the transfer of information between the source component and the target component are as fellows:

- If the target component is in a security zone with a lower security level than the security level of the security zone of the source component or if the target component is in a security zone with the same security level as the security level of the security zone of the source component, then the source component pushes the information to the target component.

- If the target component is in a security zone with a security level that is higher than the security level of the security zone of the source component, then the source component publishes the information, such as, by writing the information to an output queue of the source component, and the target component may then pull this information from the output queue.

In certain embodiments, components within the cloud infrastructure system have read/write access with respect to each other based on their security levels. These read/write operations may be performed via appropriate APIs. In one embodiment, if the source component wants to transfer information to the target component and the security level of the source component is higher than the security level of the target component, it pushes information to the target component. In such a situation, the source component invokes a synchronous write API of the target component. As an example, source component 1302 may invoke a web service API or a PL/SQL API of target component 1304 to push information to target component 1304. As another example, source component 1302 may push the information to target component 1304 in an asynchronous manner such as by publishing the information to a queue in target component 1304.

In another embodiment, if the source component needs to get information from the target component and the security level of the target component is lower than the security level of the source component or the security level of the target component is the same as the security level of the source component, the source component pulls the information from the target component by calling a synchronous read API of the target component. In one example, the source component may invoke a web service or a PL/SQL API. of the target component. If the security level of the target component is higher than the security level of the source component, the source component publishes its request for information such as in an output queue of the source component and the target component pulls this request published by the source component and then pushes the requested information to the source component.

As an example, consider an exemplary interaction between a component in order management module 214 and a component in TAS module 204 while processing a customer's subscription order in cloud infrastructure system 100. The component in order management module 214 is assigned to a security zone that is in a high security level whereas the component in TAS module 204 is assigned to a security zone that is in a medium security level. This is because all interactions between a component in order management module 214 and a component in TAS module 204 are controlled by the component in order management module 214. The component in order management module 214 creates an order and pushes the order into the component in TAS module 204. Information flowing from the component in TAS module 204 to the component in order management module 214 is stored in a queue on the component in TAS module 204 and it is then pulled from this queue by the component in order management module 214.

In certain embodiments, when a new component is introduced into cloud infrastructure system 100, security infrastructure 1300 may also allow an administrator of cloud infrastructure system 100 to assign one of the existing security zones to the component or to create a new security zone with an associated security level for the component.

Security infrastructure 1300 may also allow an administrator of cloud infrastructure system 100 to change associations between components and security zones and also the mappings between security zones and security levels. For example, when the feature set of a component changes, it is possible that the administrator may move the component to a different security zone. In this manner, an administrator of cloud infrastructure system 100 is provided complete control and flexibility on the flow of information between components of cloud infrastructure system 100.

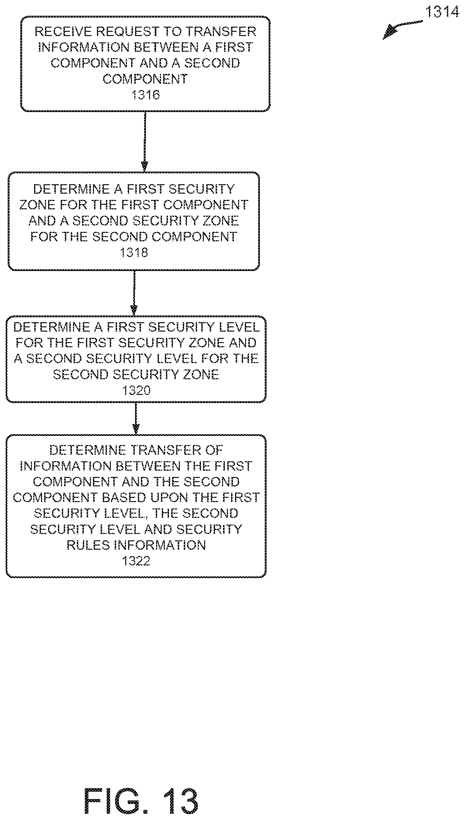

Fig. 13 depicts a simplified flowchart 1314 depicting processing that may be performed by security infrastructure 1300 in cloud infrastructure system 100, in accordance with an embodiment of the present invention. The processing depicted in Fig. 13 may be implemented in software (e.g., code, instructions, program) executed by one or more processors, hardware, or combinations thereof. The software may be stored in memory (e.g., on a memory device, on a non-transitory computer-readable storage medium). The particular series of processing steps depicted in Fig. 13 is not intended to be limiting. Other sequences of steps may also be performed according to alternative embodiments. For example, alternative embodiments of the present invention may perform the steps outlined above in a different order. Moreover, the individual steps illustrated in Fig. 13 may include multiple sub-steps that may be performed in various sequences as appropriate to the individual step. Furthermore, additional steps may be added or removed depending on the particular applications. One of ordinary skill in the art would recognize many variations, modifications, and alternatives. In one embodiment, the processing depicted in Fig. 13 may be performed by one or more components in the security infrastructure 1300 discussed in detail in Fig. 12B.

At 1316, a request to transfer information between a first component (also referred to as a source component) and a second component (also referred to as a target component) in cloud infrastructure system 100 is received.

At 1318, a first security zone for the first component and a second security zone for the second component are determined. In one embodiment, the security zones that may be assigned to the first component and the second component may include an identity management zone, a physical provisioning zone, an accounting zone, a tenant zone and a customer UI zone.

At 1320, a first security level associated with the first security zone and a second security level associated with the second security zone are determined. In one embodiment, the security levels associated with a security zone may include a high security level, a medium security level or a low security level.

At 1322, the transfer of information between the first component and the second component is determined based upon the first security level, the second security level, and security rules information. In one embodiment, the security rules information specifies one or more rules related to the transfer of information between the first component and the second component. In one embodiment, and as discussed in Fig. 12B, if the source component wants to transfer information to the target component and the security level of the source component is higher than the security level of the target component, it pushes information to the target component. In such a situation, the source component invokes a synchronous write API of the target component or publishes the information to a queue in the target component. On the hand, if the target component is in a security zone with a security level that is higher than the security level of the security zone of the source component, then the source component publishes the information, such as, by writing the information to an output queue of the source component, and the target component may then pull this information from the output queue.

In another embodiment, if the source component needs to get information from the target component and the security level of the target component is lower than the security level of the source component or the security level of the target component is the same as the security level of the source component, the source component pulls the information from the target component by calling a synchronous read API of the target component. On the other hand, if the security level of the target component is higher than the security level of the source component, the source component publishes its request for information such as in an output queue of the source component and the target component pulls this request published by the source component and then pushes the requested information to the source component.

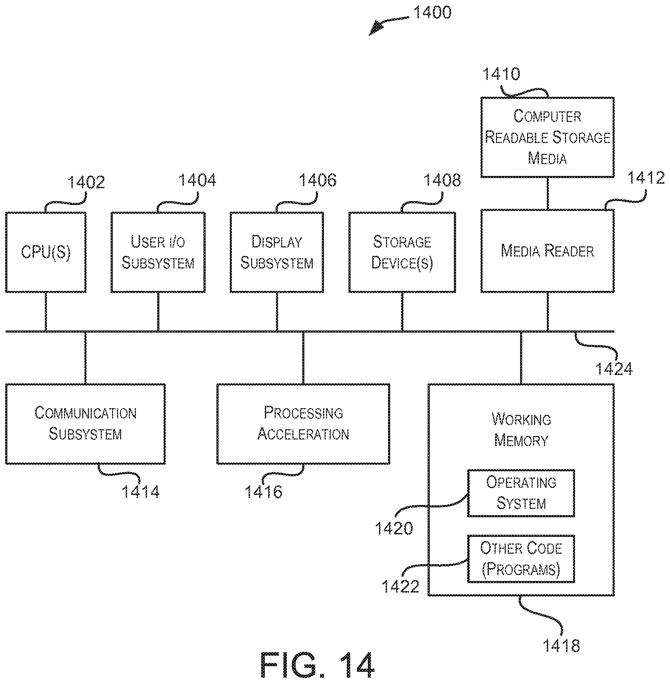

Fig. 14 is a simplified block diagram of a computing system 1400 that may be used in accordance with embodiments of the present invention. For example, cloud infrastructure system 100 may comprise one or more computing devices. System 1400 depicted in Fig. 14 may be an example of one such computing device. Computer system 1400 is shown comprising hardware elements that may be electrically coupled via a bus 1424. The hardware elements may include one or more central processing units (CPUs) 1402, one or more input devices 1404 (e.g., a mouse, a keyboard, etc.), and one or more output devices 1406 (e.g., a display device, a printer, etc.). The CPUs may include single or multicore CPUs. Computer system 1400 may also include one or more storage devices 1408. By way of example, the storage device(s) 1408 may include devices such as disk drives, optical storage devices, and solid-state storage devices such as a random access memory (RAM) and/or a read-only memory (ROM), which can be programmable, flash-updateable and/or the like.

Computer system 1400 may additionally include a computer-readable storage media reader 1412, a communications subsystem 1414 (e.g., a modem, a network card (wireless or wired), an infra-red communication device, etc.), and working memory 1418, which may include RAM and ROM devices as described above. In some embodiments, computer system 1400 may also include a processing acceleration unit 1416, which can include a digital signal processor (DSP), a special-purpose processor, and/or the like.

Computer-readable storage media reader 1412 can further be connected to a computer-readable storage medium 1410, together (and, optionally, in combination with storage device(s) 1408) comprehensively representing remote, local, fixed, and/or removable storage devices plus storage media for temporarily and/or more permanently containing computer-readable information. Communications system 1414 may permit data to be exchanged with network 1424 and/or any other computer described above with respect to system environment 1400.

Computer system 1400 may also comprise software elements, shown as being currently located within working memory 1418, including an operating system 1420 and/or other code 1422, such as an application program (which may be a client application, Web browser, mid-tier application, RDBMS, etc.). In an exemplary embodiment, working memory 1418 may include executable code and associated data structures such as memory structures used for processing authorization requests described above. It should be appreciated that alternative embodiments of computer system 1400 may have numerous variations from that described above. For example, customized hardware might also be used and/or particular elements might be implemented in hardware, software, (including portable software, such as applets), or both. Further, connection to other computing devices such as network input/output devices may be employed.

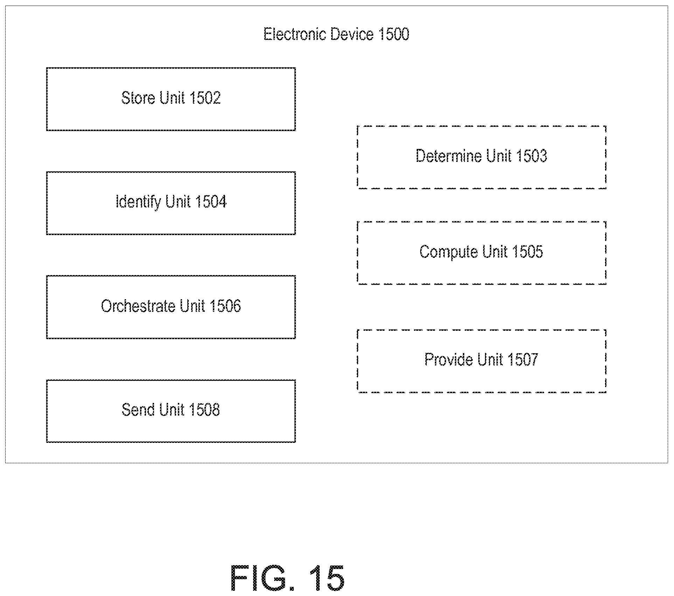

Fig. 15 is an electronic device 1500 in accordance with embodiments of the present invention. The electronic device 1500 may comprise: a store unit 1502, configured to store subscription order information related to a subscription order received from a customer for one or more services provided by a cloud infrastructure system; an identify unit 1504, configured to identify a process to be used for servicing the subscription order, wherein the process comprises one or more execution steps for provisioning one or more resources for the one or more services identified in the subscription order; an orchestrate unit 1506, configured to orchestrate the performance of the one or more execution steps corresponding to the process; and a send unit 1508, configured to send a notification to the customer indicating a status of the subscription order.

In one example, orchestrating the performance of the one or more execution steps comprises allocating the one or more resources for the one or more services identified in the subscription order.

In one example, the identify unit 1504 is further configured to access a service repository accessible to the cloud infrastructure system to determine the process for servicing the subscription order.

In one example, the electronic device 1500 further comprises a determine unit 1503, configured to determine usage information for the one or more resources, the usage information identifying usage of the one or more resources over a period of time; a compute unit 1505, configured to compute, based upon the usage information and upon the subscription order information, over usage of a first resource in the one or more resources for the period of time; and a provide unit 1507, configured to provide information indicative of the over usage to the customer.

In one example, the compute unit 1505 is further configured to determine a resource type corresponding to the first resource; determine an operator to use for computing the over usage for the first resource; and calculate the over usage for the first resource by applying the operator to usage statistics corresponding to the first resource included in the usage information.

In one example, the compute unit 1505 is further configured to determine a number of overage units for the first resource and to determine an overage cost corresponding to the number of overage units. The compute unit 1505 may be configured to compute the over usage by determining the number of overage units for the first resource and by determining an overage cost corresponding to the number of overage units. The compute unit 1505 is further configured to determine a number of overage units for the first resource and an overage cost corresponding to the number of overage units by determining a service level and a customer level associated with subscription order for the customer. The provide unit 1507 is further configured to provide information indicative of the over usage to the customer. Providing the information may include sending a notification to the customer indicating the number of overage units for the first resource and the overage cost.

The electronic device 1500 further comprises: a first workflow identify unit, configured to identify, based upon the subscription order information and the process, a first set of one or more workflows corresponding to processing to be performed for the subscription order; and a second workflow identify unit, configured to identify, based upon the subscription order information and the process, a second set of one or more workflow corresponding to processing to be performed for the subscription order; and a service access enable unit, configured to enable the customer to access the one or more services using the cloud infrastructure system after completion of execution of the first set of one or more workflows and before completion of at least one workflow in the second set of one or more workflows.

The electronic device 1500 further comprises: a workflow execute unit, configured to execute at least one workflow in the first set of one or more workflows concurrently with at least one workflow in the second set of one or more workflows.

The electronic device 1500 further comprises: a security zone determine unit, configured to determine a security zone for a component of the cloud infrastructure system, wherein the component accesses the subscription order information related to the subscription order for provisioning the one or more resources; a security level determine unit, configured to determine a security level associated with the first security zone; and a subscriber order information access enable unit, configured to enable the component to access the subscriber order information based on security rule associated with the security level.

The electronic device 1500 further comprises a transfer request unit, configured to receive a request to transfer the subscription order information between a first component of the cloud infrastructure system and a second component of the cloud infrastructure system, wherein the first component and the second component are executed by the one or more computing devices. The security zone determine unit is further configured to determine a first security zone for the first component and to determine a second security zone for the second component. The security level determine unit is further configured to determine a first security level associated with the first security zone and to determine a second security level associated with the second security zone. The transfer request unit is further configured to determine the transfer of the subscription order information between the first component and the second component based upon the first security level, the second security level, and security rules information, wherein the security rules information specifies one or more rules related to the transfer of the subscription order information between the first component and the second component.

The electronic device 1500 further comprises: a receive unit, configured to receive, at a tenant automation subsystem of the cloud infrastructure system, the subscription order from the customer; a geographic region determine unit, configured to determine a geographic region where the subscription order originates; and a select unit, configured to select, based on the geographic region, a tenant automation subsystem data center of the cloud infrastructure system where the performance of the one or more execution steps are to be orchestrated.

It is noted that the units shown by dotted lines are optional. The various units disclosed herein may be implemented or performed with hardware, software or the combination thereof. They may be implemented or performed with a general purpose single- or multi-chip processor, a DSP, an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, e.g., a combination of a DSP and a microprocessor, a plurality of microprocessors, one or more microprocessors in conjunction with a DSP core, or any other such configuration. In some implementations, the units may be implemented by circuitry that is specific to a given function.

Storage media and computer readable media for containing code, or portions of code, can include any appropriate media known or used in the art, including storage media and communication media, such as but not limited to volatile and non-volatile, removable and non-removable media implemented in any method or technology for storage of information such as computer readable instructions, data structures, program modules, or other data. Examples of storage and computer-readable media include RAM, ROM, EEPROM, flash memory or other memory technology, CD-ROM, digital versatile disk (DVD) or other optical storage, magnetic cassettes, magnetic tape, magnetic disk storage or other magnetic storage devices, or any other memory medium which can be used to store the desired information and which can be read by a computer. Storage media and computer readable media may include non-transitory memory devices.

Although specific embodiments of the invention have been described, various modifications, alterations, alternative constructions, and equivalents are also encompassed within the scope of the invention. Embodiments of the present invention are not restricted to operation within certain specific data processing environments, but are free to operate within a plurality of data processing environments. Additionally, although embodiments of the present invention have been described using a particular series of transactions and steps, it should be apparent to those skilled in the art that the scope of the present invention is not limited to the described series of transactions and steps.

Further, while embodiments of the present invention have been described using a particular combination of hardware and software, it should be recognized that other combinations of hardware and software are also within the scope of the present invention. Embodiments of the present invention may be implemented only in hardware, or only in software, or using combinations thereof.

The specification and drawings are, accordingly, to be regarded in an illustrative rather than a restrictive sense. It will, however, be evident that additions, subtractions, deletions, and other modifications and changes may be made thereunto without departing from the scope as set forth in the claims.

**Claims**

1. A method for provisioning one or more computing resources for instantiating at least one service instance in a cloud computing system, the method comprising:

   receiving (1102), by the cloud computing system, a subscription order from a client device for subscribing to one or more services provided by the cloud computing system;
   identifying (1104, 1106), by the cloud computing system, a primary workflow and a secondary workflow for servicing the subscription order, wherein the primary workflow includes one or more primary execution steps, and wherein the secondary workflow includes one or more secondary execution steps, wherein the primary execution steps are not dependent on the secondary execution steps;determining dependence of individual secondary execution steps on individual primary execution steps and/or other secondary execution steps, determining an execution order of the secondary execution steps relative to individual primary execution steps and other secondary execution steps based on said dependence;
   executing the primary execution steps in the primary workflow and the secondary execution steps in the secondary workflow, wherein at least one secondary execution step in the secondary workflow is executed concurrently with at least one primary execution step in the primary workflow according to said dependence therebetween;
   enabling (1108), by the cloud computing system, access to the one or more services after all execution steps of the one or more primary execution steps have completed execution and before all execution steps of the one or more secondary execution steps have completed execution; and
   sending (1109), by the cloud computing system, a notification to the client device indicating that the one or more services in the subscription order have been provisioned.

2. The method of claim 1, wherein the one or more primary execution steps include provisioning (706) the one or more computing resources for the one or more services identified in the subscription order.

3. The method of claim 2, wherein provisioning includes configuring the one or more computing resources to be accessible for the one or more services identified in the subscription order.

4. The method of claim 2 or 3, further comprising:

   determining (904) usage information for the one or more computing resources, the usage information identifying usage of the one or more computing resources over a period of time;
   computing (906), based upon the usage information and upon the subscription order information, over usage of a first computing resource in the one or more computing resources for the period of time; and

providing (908) information indicative of the over usage to the client device.

5. The method of claim 4, wherein computing the over usage of the first computing resource further comprises:

determining a resource type corresponding to the first computing resource;
determining an operation to perform for computing the over usage for the first computing resource, wherein the operation is determined based on the resource type; and
computing the over usage for the first computing resource by performing the operation using usage statistics corresponding to the first computing resource included in the usage information.

6. The method of claim 5, wherein:

computing the over usage for the first computing resource comprises determining a number of overage units for the first computing resource and computing a value indicating the over usage of the first computing resource, wherein the value is computed based on the number of overage units and price information corresponding to an overage unit, wherein the number of overage units and the price information are determined based on a service level and a customer level associated with the subscription order for the client device; and
providing information indicative of the over usage for the first computing resource to the client device comprises sending a notification to the client device indicating the number of overage units for the first computing resource and the value indicating the over usage of the first computing resource.

7. The method of any one of claims 1 to 6, wherein the one or more secondary execution steps include processing the subscription order.

8. A cloud computing system (230) configured for provisioning one or more computing resources for instantiating at least one service instance, the cloud computing system comprising: one or more computing devices configurable to provide one or more services, wherein at least one computing device from the one or more computing devices is configurable to:

receive a subscription order from a client device for subscribing to one or more services provided by the cloud computing system;
identify a primary workflow and a secondary workflow for servicing the subscription order, wherein the primary workflow includes one or more primary execution steps, and wherein the secondary workflow includes one or more secondary execution steps;
determine dependence of individual secondary execution steps on individual primary execution steps and/or other secondary execution steps, determining an execution order of the secondary execution steps relative to individual primary execution steps and other secondary execution steps based on said dependence;
execute the primary execution steps in the primary workflow and the secondary execution steps in the secondary workflow, wherein at least one secondary execution step in the secondary workflow is executed concurrently with at least one primary execution step in the primary workflow according to said dependence; enable access to the one or more services after all execution steps of the one or more primary execution steps have completed execution and before all execution steps of the one or more secondary execution steps have completed execution; and
send a notification to the client device indicating that the one or more services in the subscription order are accessible to the client device.

9. The system of claim 8, wherein the one or more primary execution steps include provisioning one or more computing resources for the one or more services identified in the subscription order.

10. The system of claim 9, wherein provisioning includes configuring the one or more computing resources to be accessible for the one or more services identified in the subscription order.

11. The system of claim 9 or 10, wherein at least one computing device from the one or more computing devices is configurable to:

determine usage information for the one or more computing resources, the usage information identifying usage of the one or more computing resources over a period of time;
compute, based upon the usage information and upon the subscription order information, over usage of a first computing resource in the one or more computing resources for the period of time; and
provide information indicative of the over usage to the client device.

12. The system of claim 11, wherein computing the over usage of the first computing resource further comprises:

determining a resource type corresponding to the first computing resource;
determining an operation to perform for computing the over usage for the first computing resource, wherein the operation is determined based on the resource type; and
computing the over usage for the first computing resource by performing the operation using usage statistics corresponding to the first computing resource included in the usage information.

13. The system of any one of claims 9, 10, 11 or 12, wherein the one or more secondary execution steps include processing the subscription order.

14. A computer-readable memory storing a plurality of instructions executable by one or more processors for provisioning one or more computing resources for instantiating at least one service instance in a cloud computing system, the plurality of instructions comprising:

instructions for receiving, by the cloud computing system, a subscription order from a client device for subscribing to one or more services provided by the cloud computing system;
instructions for identifying, by the cloud computing system, a primary workflow and a secondary workflow for servicing the subscription order, wherein the primary workflow includes one or more primary execution steps, and wherein the secondary workflow includes one or more secondary execution steps;
instructions for determining dependence of individual secondary execution steps on individual primary execution steps and/or other secondary execution steps, determining an execution order of the secondary execution steps relative to individual primary execution steps and other secondary execution steps based on said dependence;
instructions for executing the primary execution steps in the primary workflow and the secondary execution steps in the secondary workflow, wherein at least one secondary execution step in the secondary workflow is executed concurrently with at least one primary execution step in the primary workflow according to said dependence therebetween;
instructions for enabling, by the cloud computing system, access to the one or more services after all execution steps of the one or more primary execution steps have completed execution and before all execution steps of the one or more secondary execution steps have completed execution; and
instructions for sending by the cloud computing system, a notification to the client device indicating that the one or more services in the subscription order have been provisioned.

15. The computer-readable memory of claim 14, wherein the one or more primary execution steps include provisioning one or more computing resources for the one or more services identified in the subscription order, and wherein the one or more secondary execution steps include processing the subscription order.

**Patentansprüche**

1. Verfahren zum Bereitstellen einer oder mehrerer Computerressourcen zum Instanziieren wenigstens einer Dienstinstanz in einem Cloud-Computing-System, wobei das Verfahren Folgendes umfasst:

Empfangen (1102), durch das Cloud-Computing-System, eines Abonnementauftrags von einem Clientgerät zum Abonnieren eines oder mehrerer von dem Cloud-Computing-System bereitgestellten Dienste;
Identifizieren (1104, 1106), durch das Cloud-Computing-System, eines primären Workflows und eines sekundären Workflows zum Abwickeln des Abonnementauftrags, wobei der primäre Workflow einen oder mehrere primäre Ausführungsschritte enthält, und wobei der sekundäre Workflow einen oder mehrere sekundäre Ausführungsschritte enthält, wobei die primären Ausführungsschritte nicht von den sekundären Ausführungsschritten abhängig sind;
Bestimmen der Abhängigkeit individueller sekundärer Ausführungsschritte von individuellen primären Ausführungsschritten und/oder anderen sekundären Ausführungsschritten, Bestimmen eines Ausführungsauftrags der sekundären Ausführungsschritte bezogen auf individuelle primäre Ausführungsschritte und andere sekundäre Ausführungsschritte auf der Grundlage der Abhängigkeit;
Ausführen der primären Ausführungsschritte in dem primären Workflow und der sekundären Ausführungsschritte in dem sekundären Workflow, wobei wenigstens ein sekundärer Ausführungsschritt im sekundären Workflow gleichzeitig mit wenigstens einem primären Ausführungsschritt im primären Workflow gemäß der Abhängigkeit dazwischen ausgeführt wird;

Ermöglichen (1108), durch das Cloud-Computing-System, von Zugang zu dem einen oder den mehreren Diensten, nachdem alle Ausführungsschritte des einen oder der mehreren primären Ausführungsschritte das Ausführen abgeschlossen haben und bevor alle Ausführungsschritte des einen oder der mehreren sekundären Ausführungsschritte das Ausführen abgeschlossen haben; und

Senden (1109), durch das Cloud-Computing-System, einer Benachrichtigung an das Clientgerät, die angibt, dass der eine oder die mehreren Dienste im Abonnementauftrag bereitgestellt worden sind.

2. Verfahren nach Anspruch 1, wobei der eine oder die mehreren primären Ausführungsschritte das Bereitstellen (706) der einen oder der mehreren Computerressourcen für den einen oder die mehreren im Abonnementauftrag identifizierten Dienste enthalten.

3. Verfahren nach Anspruch 2, wobei das Bereitstellen das Konfigurieren der einen oder der mehreren Computerressourcen enthält, um für den einen oder die mehreren im Abonnementauftrag identifizierten Dienste zugänglich zu sein.

4. Verfahren nach Anspruch 2 oder 3, ferner Folgendes umfassend:

Bestimmen (904) von Anwendungsinformationen für die eine oder die mehreren Computerressourcen, wobei die Anwendungsinformationen die Anwendung der einen oder der mehreren Computerressourcen über einen Zeitraum identifizieren;

Berechnen (906), auf der Grundlage der Anwendungsinformationen und der Abonnementauftragsinformationen, von übermäßiger Anwendung einer ersten Computerressource in der einen oder den mehreren Computerressourcen für den Zeitraum; und

Bereitstellen (908) von Informationen, die dem Clientgerät die übermäßige Anwendung angeben.

5. Verfahren nach Anspruch 4, wobei das Berechnen der übermäßigen Anwendung der ersten Computerressource ferner Folgendes umfasst:

Bestimmen eines Ressourcentyps, der der ersten Computerressource entspricht;

Bestimmen eines Vorgangs zum Durchführen zum Berechnen der übermäßigen Anwendung für die erste Computerressource, wobei der Vorgang auf der Grundlage des Ressourcentyps bestimmt wird; und

Berechnen der übermäßigen Anwendung für die erste Computerressource durch Durchführen des Vorgangs unter Verwendung von Anwendungsstatistiken, die der in den Anwendungsinformationen enthaltenen ersten Computerressource entsprechen.

6. Verfahren nach Anspruch 5, wobei:

Berechnen der übermäßigen Anwendung für die erste Computerressource Folgendes umfasst: Bestimmen einer Anzahl von Überschusseinheiten für die erste Computerressource und Berechnen eines Werts, der die übermäßige Anwendung der ersten Computerressource angibt, wobei der Wert auf der Grundlage der Anzahl von Überschusseinheiten und einer Überschusseinheit entsprechenden Preisinformationen berechnet wird, wobei die Anzahl der Überschusseinheiten und die Preisinformationen auf der Grundlage einer Dienstebene und einer Kundenebene, die mit dem Abonnementauftrag für das Clientgerät verknüpft ist, bestimmt werden; und Bereitstellen von Informationen, die dem Clientgerät die übermäßige Anwendung für die erste Computerressource anzeigen, das Senden einer Benachrichtigung an das Clientgerät, das die Anzahl von Überschusseinheiten für die erste Computerressource angibt, umfasst, und wobei der Wert die Überschussanwendung der ersten Computerressource angibt.

7. Verfahren nach einem der Ansprüche 1 bis 6, wobei der eine oder die mehreren sekundären Ausführungsschritte das Verarbeiten des Abonnementauftrags enthalten.

8. Cloud-Computing-System (230), konfiguriert zum Bereitstellen einer oder mehrerer Computerressourcen zum Instanziieren wenigstens einer Dienstinstanz, wobei das Cloud-Computing-System Folgendes umfasst: ein oder mehrere Computergeräte, konfigurierbar zum Bereitstellen eines oder mehrerer Dienste, wobei wenigstens ein Computergerät aus dem einen oder den mehreren Computergeräten konfigurierbar ist zum:

Empfangen eines Abonnementauftrags von einem Clientgerät zum Abonnieren eines oder mehrerer Dienste, die durch das Cloud-Computing-System bereitgestellt werden;

Identifizieren eines primären Workflows und eines sekundären Workflows zum Abwickeln des Abonnementauftrags, wobei der primäre Workflow einen oder mehrere primäre Ausführungsschritte enthält und wobei der sekundäre Workflow einen oder mehrere sekundäre Ausführungsschritte enthält;

Bestimmen der Abhängigkeit individueller sekundärer Ausführungsschritte von individuellen primären Ausführungsschritten und/oder anderen sekundären Ausführungsschritten, Bestimmen eines Ausführungsauftrags der sekundären Ausführungsschritte bezogen auf individuelle primäre Ausführungsschritte und andere sekundäre Ausführungsschritte auf der Grundlage der Abhängigkeit;

Ausführen der primären Ausführungsschritte in dem primären Workflow und der sekundären Ausführungsschritte in dem sekundären Workflow, wobei wenigstens ein sekundärer Ausführungsschritt im sekundären Workflow gleichzeitig mit wenigstens einem primären Ausführungsschritt im primären Workflow gemäß der Abhängigkeit ausgeführt wird; Ermöglichen von Zugang zu dem einen oder den mehreren Diensten, nachdem alle Ausführungsschritte des einen oder der mehreren primären Ausführungsschritte das Ausführen abgeschlossen haben und bevor alle Ausführungsschritte des einen oder der mehreren sekundären Ausführungsschritte das Ausführen abgeschlossen haben; und

Senden einer Benachrichtigung an das Clientgerät, das angibt, dass der eine oder die mehreren Dienste im Abonnementauftrag für das Clientgerät zugänglich sind.

9. System nach Anspruch 8, wobei der eine oder die mehreren primären Ausführungsschritte das Bereitstellen einer oder mehrerer Computerressourcen für den einen oder die mehreren im Abonnementauftrag identifizierten Dienste enthalten.

10. System nach Anspruch 9, wobei das Bereitstellen das Konfigurieren der einen oder der mehreren Computerressourcen enthält, um für den einen oder die mehreren im Abonnementauftrag identifizierten Dienste zugänglich zu sein.

11. System nach Anspruch 9 oder 10, wobei wenigstens ein Computergerät von dem einen oder den mehreren Computergeräten konfigurierbar sind zum:

Bestimmen von Anwendungsinformationen für die eine oder die mehreren Computerressourcen, wobei die Anwendungsinformationen die Anwendung der einen oder der mehreren Computerressourcen über einen Zeitraum identifizieren;

Berechnen, auf der Grundlage der Anwendungsinformationen und der Abonnementauftragsinformationen, von übermäßiger Anwendung einer ersten Computerressource in der einen oder den mehreren Computerressourcen für den Zeitraum; und

Bereitstellen von Informationen, die dem Clientgerät die übermäßige Anwendung anzeigen.

12. System nach Anspruch 11, wobei das Berechnen der übermäßigen Anwendung der ersten Computerressource ferner Folgendes umfasst:

Bestimmen eines Ressourcentyps, der der ersten Computerressource entspricht;

Bestimmen eines Vorgangs zum Durchführen zum Berechnen der übermäßigen Anwendung für die erste Computerressource, wobei der Vorgang auf der Grundlage des Ressourcentyps bestimmt wird; und

Berechnen der übermäßigen Anwendung für die erste Computerressource durch Durchführen des Vorgangs unter Verwendung von Anwendungsstatistiken, die der in den Anwendungsinformationen enthaltenen ersten Computerressource entsprechen.

13. System nach einem der Ansprüche 9, 10, 11 oder 12, wobei der eine oder die mehreren sekundären Ausführungsschritte das Verarbeiten des Abonnementauftrags enthalten.

14. Computerlesbarer Speicher, der mehrere durch einen oder mehrere Prozessoren ausführbare Anweisungen zum Bereitstellen einer oder mehrerer Computerressourcen zum Instanziieren wenigstens einer Dienstinstanz in einem Cloud-Computing-System speichert, wobei die mehreren Anweisungen Folgendes umfassen:

Anweisungen zum Empfangen, durch das Cloud-Computing-System, eines Abonnementauftrags von einem Clientgerät zum Abonnieren eines oder mehrerer von dem Cloud-Computing-System bereitgestellten Dienste;

Anweisungen zum Identifizieren, durch das Cloud-Computing-System, eines primären Workflows und eines sekundären Workflows zum Abwickeln des Abonnementauftrags, wobei der primäre Workflow einen oder mehrere primäre Ausführungsschritte enthält und wobei der sekundäre Workflow einen oder mehrere sekundäre Ausführungsschritte enthält;

Anweisungen zum Bestimmen der Abhängigkeit individueller sekundärer Ausführungsschritte von individuellen primären Ausführungsschritten und/oder anderen sekundären Ausführungsschritten, Bestimmen eines Ausführungsauftrags der sekundären Ausführungsschritte bezogen auf individuelle primäre Ausführungsschritte und andere sekundäre Ausführungsschritte auf der Grundlage der Abhängigkeit;

Anweisungen zum Ausführen der primären Ausführungsschritte in dem primären Workflow und der sekundären Ausführungsschritte in dem sekundären Workflow, wobei wenigstens ein sekundärer Ausführungsschritt im sekundären Workflow gleichzeitig mit wenigstens einem primären Ausführungsschritt im primären Workflow gemäß der Abhängigkeit dazwischen ausgeführt wird;

Anweisungen zum Ermöglichen, durch das Cloud-Computing-System, von Zugang zu einem oder mehreren Diensten, nachdem alle Ausführungsschritte des einen oder der mehreren primären Ausführungsschritte das Ausführen abgeschlossen haben und bevor alle Ausführungsschritte des einen oder der mehreren sekundären Ausführungsschritte das Ausführen abgeschlossen haben; und

Anweisungen zum Senden, durch das Cloud-Computing-System, einer Benachrichtigung an das Clientgerät, die angibt, dass der eine oder die mehreren Dienste im Abonnementauftrag bereitgestellt worden sind.

15. Computerlesbarer Speicher nach Anspruch 14, wobei der eine oder die mehreren primären Ausführungsschritte das Bereitstellen einer oder mehrerer Computerressourcen für den einen oder die mehreren im Abonnementauftrag identifizierten Dienste enthalten, und wobei der eine oder die mehreren sekundären Ausführungsschritte das Verarbeiten des Abonnementauftrags enthalten.

## Revendications

1. Procédé d'approvisionnement d'une ou plusieurs ressources informatiques pour instancier au moins une instance de service dans un système informatique en nuage, le procédé comprenant :

la réception (1102), par le système informatique en nuage, d'un bulletin d'abonnement provenant d'un dispositif client pour un abonnement à un ou plusieurs services fournis par le système informatique en nuage ;

l'identification (1104, 1106), par le système informatique en nuage, d'un flux de production principal et d'un flux de production secondaire pour desservir le bulletin d'abonnement, dans lequel le flux de production principal comporte une ou plusieurs étapes d'exécution principales, et dans lequel le flux de production secondaire comporte une ou plusieurs étapes d'exécution secondaires, dans lequel les étapes d'exécution principales ne dépendent pas des étapes d'exécution secondaires ; la détermination d'une dépendance d'étapes d'exécution secondaires individuelles vis-à-vis d'étapes d'exécution principales individuelles et/ou d'autres étapes d'exécution secondaires, la détermination d'un ordre d'exécution des étapes d'exécution secondaires par rapport à des étapes d'exécution principales individuelles et d'autres étapes d'exécution secondaires étant basée sur ladite dépendance ;

l'exécution des étapes d'exécution principales dans le flux de production principal et des étapes d'exécution secondaires dans le flux de production secondaire, dans lequel au moins une étape d'exécution secondaire dans le flux de production secondaire est exécutée simultanément à au moins une étape d'exécution principale dans le flux de production principal selon ladite dépendance entre elles ;

l'autorisation (1108), par le système informatique en nuage, d'accès aux un ou plusieurs services après que toutes les étapes d'exécution des une ou plusieurs étapes d'exécution principales ont achevé une exécution et avant que toutes les étapes d'exécution des une ou plusieurs étapes d'exécution secondaires n'aient achevé une exécution ; et

l'envoi (1109), par le système informatique en nuage, d'une notification au dispositif client indiquant que les un ou plusieurs services dans le bulletin d'abonnement ont été approvisionnés.

2. Procédé selon la revendication 1, dans lequel les une ou plusieurs étapes d'exécution principales comportent l'approvisionnement (706) des une ou plusieurs ressources informatiques pour les un ou plusieurs services identifiés dans le bulletin d'abonnement.

3. Procédé selon la revendication 2, dans lequel l'approvisionnement comporte la configuration des une ou plusieurs ressources informatiques pour qu'elles soient accessibles aux un ou plusieurs services identifiés dans le bulletin d'abonnement.

4. Procédé selon la revendication 2 ou 3, comprenant en outre :

   la détermination (904) d'informations d'utilisation pour les une ou plusieurs ressources informatiques, les informations d'utilisation identifiant une utilisation des une ou plusieurs ressources informatiques sur une période de temps ;
   le calcul informatique (906), d'après les informations d'utilisation et d'après les informations de bulletin d'abonnement, d'une surutilisation d'une première ressource informatique dans les une ou plusieurs ressources informatiques pour la période de temps ; et
   la fourniture (908) d'informations indicatives de la surutilisation au dispositif client.

5. Procédé selon la revendication 4, dans lequel le calcul informatique de la surutilisation de la première ressource informatique comprend en outre :

   la détermination d'un type de ressource correspondant à la première ressource informatique ;
   la détermination d'une opération à réaliser pour calculer informatiquement la surutilisation pour la première ressource informatique, dans lequel l'opération est déterminée d'après le type de ressource ; et
   le calcul informatique de la surutilisation pour la première ressource informatique en réalisant l'opération à l'aide de statistiques d'utilisation correspondant à la première ressource informatique incluse dans les informations d'utilisation.

6. Procédé selon la revendication 5, dans lequel :

   le calcul informatique de la surutilisation pour la première ressource informatique comprend la détermination d'un nombre d'unités d'excédant pour la première ressource informatique et le calcul informatique d'une valeur indiquant la surutilisation de la première ressource informatique, dans lequel la valeur est calculée informatiquement d'après le nombre d'unités d'excédant et des informations de prix correspondant à une unité d'excédant, dans lequel le nombre d'unités d'excédant et les informations de prix sont déterminés d'après un niveau de service et un niveau de client associés au bulletin d'abonnement pour le dispositif client ; et
   la fourniture d'informations indicatives de la surutilisation pour la première ressource informatique au dispositif client comprend l'envoi d'une notification au dispositif client indiquant le nombre d'unités d'excédant pour la première ressource informatique et la valeur indiquant la surutilisation de la première ressource informatique.

7. Procédé selon l'une quelconque des revendications 1 à 6, dans lequel les une ou plusieurs étapes d'exécution secondaires comportent le traitement du bulletin d'abonnement.

8. Système informatique en nuage (230) configuré pour approvisionner une ou plusieurs ressources informatiques pour instancier au moins une instance de service, le système informatique en nuage comprenant : un ou plusieurs dispositifs informatiques configurables pour fournir un ou plusieurs services, dans lequel au moins un dispositif informatique parmi les un ou plusieurs dispositifs informatiques est configurable pour :

   recevoir un bulletin d'abonnement provenant d'un dispositif client pour un abonnement à un ou plusieurs services fournis par le système informatique en nuage ;
   identifier un flux de production principal et un flux de production secondaire pour desservir le bulletin d'abonnement, dans lequel le flux de production principal comporte une ou plusieurs étapes d'exécution principales, et dans lequel le flux de production secondaire comporte une ou plusieurs étapes d'exécution secondaires ;
   déterminer une dépendance d'étapes d'exécution secondaires individuelles vis-à-vis d'étapes d'exécution principales individuelles et/ou d'autres étapes d'exécution secondaires, la détermination d'un ordre d'exécution des étapes d'exécution secondaires par rapport à des étapes d'exécution principales individuelles et d'autres étapes d'exécution secondaires étant basée sur ladite dépendance ;
   exécuter les étapes d'exécution principales dans le flux de production principal et les étapes d'exécution secondaires dans le flux de production secondaire, dans lequel au moins une étape d'exécution secondaire dans le flux de production secondaire est exécutée simultanément à au moins une étape d'exécution principale dans le flux de production principal selon ladite dépendance ; autoriser un accès aux un ou plusieurs services après que toutes les étapes d'exécution des une ou plusieurs étapes d'exécution principales ont achevé une exécution et avant que toutes les étapes d'exécution des une ou plusieurs étapes d'exécution secondaires n'aient achevé une exécution ; et
   envoyer une notification au dispositif client indiquant que les un ou plusieurs services dans le bulletin d'abonnement sont accessibles au dispositif client.

**9.** Système selon la revendication 8, dans lequel les une ou plusieurs étapes d'exécution principales comportent l'approvisionnement d'une ou plusieurs ressources informatiques pour les un ou plusieurs services identifiés dans le bulletin d'abonnement.

**10.** Système selon la revendication 9, dans lequel l'approvisionnement comporte la configuration des une ou plusieurs ressources informatiques pour qu'elles soient accessibles aux un ou plusieurs services identifiés dans le bulletin d'abonnement.

**11.** Système selon la revendication 9 ou 10, dans lequel au moins un dispositif informatique parmi les un ou plusieurs dispositifs informatiques est configurable pour :

déterminer des informations d'utilisation pour les une ou plusieurs ressources informatiques, les informations d'utilisation identifiant une utilisation des une ou plusieurs ressources informatiques sur une période de temps ; calculer informatiquement, d'après les informations d'utilisation et d'après les informations de bulletin d'abonnement, une surutilisation d'une première ressource informatique dans les une ou plusieurs ressources informatiques pour la période de temps ; et fournir des informations indicatives de la surutilisation au dispositif client.

**12.** Système selon la revendication 11, dans lequel le calcul informatique de la surutilisation de la première ressource informatique comprend en outre :

la détermination d'un type de ressource correspondant à la première ressource informatique ; la détermination d'une opération à réaliser pour calculer informatiquement la surutilisation pour la première ressource informatique, dans lequel l'opération est déterminée d'après le type de ressource ; et le calcul informatique de la surutilisation pour la première ressource informatique en réalisant l'opération à l'aide de statistiques d'utilisation correspondant à la première ressource informatique incluse dans les informations d'utilisation.

**13.** Système selon l'une quelconque des revendications 9, 10, 11 ou 12, dans lequel les une ou plusieurs étapes d'exécution secondaires comportent le traitement du bulletin d'abonnement.

**14.** Mémoire lisible par ordinateur stockant une pluralité d'instructions exécutables par un ou plusieurs processeurs pour approvisionner une ou plusieurs ressources informatiques pour instancier au moins une instance de service dans un système informatique en nuage, la pluralité d'instructions comprenant :

des instructions pour recevoir, par le système informatique en nuage, un bulletin d'abonnement provenant d'un dispositif client pour un abonnement à un ou plusieurs services fournis par le système informatique en nuage ; des instructions pour identifier, par le système informatique en nuage, un flux de production principal et un flux de production secondaire pour desservir le bulletin d'abonnement, dans lequel le flux de production principal comporte une ou plusieurs étapes d'exécution principales, et dans lequel le flux de production secondaire comporte une ou plusieurs étapes d'exécution secondaires ; des instructions pour déterminer une dépendance d'étapes d'exécution secondaires individuelles vis-à-vis d'étapes d'exécution principales individuelles et/ou d'autres étapes d'exécution secondaires, la détermination d'un ordre d'exécution des étapes d'exécution secondaires par rapport à des étapes d'exécution principales individuelles et d'autres étapes d'exécution secondaires étant basée sur ladite dépendance ; des instructions pour exécuter les étapes d'exécution principales dans le flux de production principal et les étapes d'exécution secondaires dans le flux de production secondaire, dans lequel au moins une étape d'exécution secondaire dans le flux de production secondaire est exécutée simultanément à au moins une étape d'exécution principale dans le flux de production principal selon ladite dépendance entre elles ; des instructions pour autoriser, par le système informatique en nuage, un accès aux un ou plusieurs services après que toutes les étapes d'exécution des une ou plusieurs étapes d'exécution principales ont achevé une exécution et avant que toutes les étapes d'exécution des une ou plusieurs étapes d'exécution secondaires n'aient achevé une exécution ; et des instructions pour envoyer par le système informatique en nuage, une notification au dispositif client indiquant que les un ou plusieurs services dans le bulletin d'abonnement ont été approvisionnés.

**15.** Mémoire lisible par ordinateur selon la revendication 14, dans laquelle les une ou plusieurs étapes d'exécution principales comportent l'approvisionnement d'une ou plusieurs ressources informatiques pour les un ou plusieurs services identifiés dans le bulletin d'abonnement, et dans laquelle les une ou plusieurs étapes d'exécution secondaires comportent le traitement du bulletin d'abonnement.

CLOUD INFRASTRUCTURE SYSTEM 100

SOFTWARE AS A SERVICE (SAAS)
PLATFORM 102

CRM
SERVICES 110

HCM/TALENT
SERVICES 112

. . .

CLOUD
MANAGEMENT
FUNCTIONALITY
108

PLATFORM AS A SERVICE (PAAS)
PLATFORM 104

DATABASE
CLOUD SERVICES
114

MIDDLEWARE
CLOUD SERVICES
116

JAVA CLOUD
SERVICES 116

. . .

INFRASTRUCTURE AS A SERVICE (IAAS)
PLATFORM 110

INFRASTRUCTURE RESOURCES 106

FIG. 1A

*FIG. 1B*

FIG. 2

CLOUD INFRASTRUCTURE SYSTEM 100

230

CUSTOMER → CLIENT DEVICE 224

CUSTOMER → CLIENT DEVICE 226

CUSTOMER → CLIENT DEVICE 228

NETWORK 232

STORE UI 210

CLOUD UI 212

ORDER DATABASE 222

SUPPORT SYS 217

SUPPORT UI 216

ORDER MANAGEMENT MODULE 214

218

ENTERPRISE MANAGER (EM) MODULE 208

220

SERVICES MODULE 202

TENANT AUTOMATION SYSTEM (TAS) MODULE 204

SERVICE DEPLOYMENT INFRASTRUCTURE (SDI) MODULE 206

IDENTITY MANAGEMENT (IDM) MODULE 200

(1) (2) (3) (4) (5) (6) (7) (8) (9) (10) (11) (12) (13) (14)

43

EP 2 893 685 B1

300

PROCESS
SUBSCRIPTION
ORDER
302

IDENTIFY BUSINESS
PROCESS
ASSOCIATED WITH
ORDER
304

EXECUTE BUSINESS
PROCESS
ASSOCIATED WITH
ORDER
306

SEND NOTIFICATION
REGARDING STATUS
OF PROVISIONED
ORDER
308

*FIG. 3A*

FIG. 3B

INPUT SOURCES 321

STORE UI 210

CLOUD UI 212

ORDER DATABASE 224

ORDER MANAGEMENT MODULE 214

EM MODULE 208

TAS MODULE 204

TAS API'S 318

ORDER PROCESSING MODULE 310

BUSINESS PROCESS EXECUTOR 316

SDI MODULE 206

OVERAGE FRAMEWORK 322

BUSINESS PROCESS IDENTIFIER 312

SUBSCRIPTION GENERATOR MODULE 326

WORKFLOW IDENTIFICATION MODULE 324

SERVICES MODULE 202

SERVICE CATALOG 314

TENANT INFORMATION SYSTEM 320

EP 2 893 685 B1

FIG. 4

FIG. 5

SOAP          JMX          JDBC

SDI-WS MODULE
600

SDI MONITORING MODULE
606

SDI DATA ACCESS MODULE
608

SDI REQUEST CONTROLLER MODULE
602

SDI TASK MANAGER MODULE
604

SDI COMMON LIBRARY MODULE
610

APEX
614

WCC
616

MA
618

NUVIAQ
620

IDM
622

VAB
624

PLUG-IN
626

HS
628

SDI CONNECTOR MODULE 612

SDI MODULE 206

*FIG. 6*

700

RECEIVE BUSINESS
PROCESS
ASSOCIATED WITH
ORDER
702

TRANSLATE BUSINESS
PROCESS INTO
SERIES OF TASKS
704

PROVISION
RESOURCES BASED
ON SERIES OF TASKS
706

*FIG. 7A*

FIG. 7B

FIG. 7C

EP 2 893 685 B1

FIG. 7D

*FIG. 7E*

FIG. 8

EP 2 893 685 B1

900

STORE SUBSCRIPTION
ORDER INFORMATION
RELATED TO
SERVICES
902

DETERMINE
RESOURCE USAGE
INFORMATION
RELATED TO THE
SERVICES
904

COMPUTE OVERAGE
BASED ON
SUBSCRIPTION
ORDER INFORMATION
AND RESOURCE
USAGE INFORMATION
906

PROVIDE THE
OVERAGE TO A
CUSTOMER UTILIZING
THE SERVICES
908

# FIG. 9A

906

OBTAIN TOTAL
RESOURCE USAGE OF
A RESOURCE FOR AN
OVERAGE PERIOD
910

DETERMINE SERVICE
LEVEL, CUSTOMER
LEVEL AND OVERAGE
BAND ASSOCIATED
WITH RESOURCE
912

OBTAIN RESOURCE
USAGE LIMIT OF THE
RESOURCE
914

IS TOTAL RESOURCE
USAGE>RESOURCE USAGE
LIMIT?
916

END ← NO

YES

COMPUTE OVERAGE
FOR THE RESOURCE
FOR THE OVERAGE
PERIOD
918

FIG. 9B

FIG. 10

EP 2 893 685 B1

1100

STORE SUBSCRIPTION ORDER
INFORMATION
1102

IDENTIFY PRIMARY ORDER WORKFLOW
1104

IDENTIFY SECONDARY ORDER
WORKFLOW
1106

ENABLE ACCESS TO ORDERED SERVICE
AFTER COMPLETION OF EXECUTION OF
PRIMARY ORDER WORKFLOW
1108

NOTIFY CUSTOMER
1109

FIG. 11A

FIG.
11B

PRIMARY ORDER
WORKFLOW

SECONDARY ORDER
WORKFLOW

SECONDARY
ORDER WORKFLOW

SECONDARY ORDER
WORKFLOW

TIME

P1 S1

P2 S2

P3 S3

P4

P5

P6 S5 S6

P7 S7

S8 S9 S10

P8

S4 S11 S12

EP 2 893 685 B1

FIG. 11C

FIG.
12A

EP 2 893 685 B1

SOURCE COMPONENT 1302

SECURITY LAYER COMPONENT 1306

TARGET COMPONENT 1304

SECURITY RULES

1312

| Component | Security zone |
|---|---|
| IDM component | Identity management zone |
| TAS component | Tenant zone |
| SDI component | Physical provisioning zone |
| Order management system | Accounting zone |
| Support system | Tenant zone |
| EM component | Tenant zone |
| Cloud UI | Customer UI zone |
| Store UI | Customer UI zone |
| Support UI | Customer UI zone |

1308

| Security zone | Security level |
|---|---|
| Identity management zone | High |
| Accounting zone | High |
| Physical provisioning zone | High |
| Tenant zone | Medium |
| Customer UI zone | Low |

1310

1300

SECURITY INFRASTRUCTURE

FIG. 12B

1314

RECEIVE REQUEST TO TRANSFER
INFORMATION BETWEEN A FIRST
COMPONENT AND A SECOND
COMPONENT
1316

DETERMINE A FIRST SECURITY
ZONE FOR THE FIRST COMPONENT
AND A SECOND SECURITY ZONE
FOR THE SECOND COMPONENT
1318

DETERMINE A FIRST SECURITY LEVEL
FOR THE FIRST SECURITY ZONE AND
A SECOND SECURITY LEVEL FOR THE
SECOND SECURITY ZONE
1320

DETERMINE TRANSFER OF
INFORMATION BETWEEN THE FIRST
COMPONENT AND THE SECOND
COMPONENT BASED UPON THE FIRST
SECURITY LEVEL, THE SECOND
SECURITY LEVEL AND SECURITY
RULES INFORMATION
1322

# FIG. 13

FIG. 14

EP 2 893 685 B1

Electronic Device 1500

Store Unit 1502

Determine Unit 1503

Identify Unit 1504

Compute Unit 1505

Orchestrate Unit 1506

Provide Unit 1507

Send Unit 1508

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120047357 A1